# EUROPEAN PATENT APPLICATION

(11) **EP 4 529 041 A1**
(43) Date of publication of application: **26.03.2025**
(21) Application number: 23306582.0
(22) Date of filing: 22.09.2023
(51) Int. Cl.: H04B 7/185, H04L 5/00, H04W 76/14, H04W 76/23

(54) **USER EQUIPMENT RELAYING IN A NON-TERRESTRIAL NETWORK**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BONNEVILLE, Hervé, 35708 RENNES CEDEX 7 (FR); CIOCHINA, Cristina, 35000 RENNES (FR)
(74) Representative: Plasseraud IP

(57) **Abstract**

A method performed by a non-terrestrial communication network (NW) for relaying a signal between a first user equipment (UE1) and a second user equipment (UE2), a relaying user equipment (UER) being embarked on a network access device (SAT) of the non-terrestrial communication network (NW), the method comprising:
obtaining relaying assistance information related to an establishment of a sidelink communication mode between the relaying user equipment (UER) and the first (UE1) and/or second user equipment (UE2),
transmitting said relaying assistance information to the first user equipment (UE1) and the second user equipment (UE2),
based on said relaying assistance information, establishing first and second sidelink communication links between the relaying user equipment (UER) and the first (UE1) and second user equipment (UE2) respectively,
relaying the signal between the first user equipment (UE1) and the second user equipment (UE2) via the first and second sidelink communication links using the established sidelink communication mode.

## Description

### Technical Field

This disclosure pertains to the field of communication using non-terrestrial networks and more particularly to communication in a sidelink communication mode between user equipment in non-terrestrial networks.

### Background Art

In non-terrestrial communication networks such as in a satellite communication network, connectivity may be provided to user equipment or terminals covered by such satellite communication network based on a network architecture. Such network architecture may include at least a network access device or payload, such as a satellite, which relays signals to one or several base stations through a satellite gateway via a feeder link. Such satellite gateway is usually located on Earth. For example, in wireless communication standard such as New Radio (or NR), when user equipment connected to a satellite communication network want to establish a communication (e.g., transmitting data packets from a transmitting user equipment to a receiving user equipment), a radio protocol is emitted by the transmitting equipment to the satellite via the service link (e.g., via the air interface or Uu interface). Such radio protocol may then be forwarded to a base station (e.g., a gNodeB or gNB) via a satellite gateway on Earth linked to the satellite by the feeder link. The base station may then connect to a User Plane Function (or UPF) of the core network for the transfer of application data (or data packets) to be looped back to the receiving user equipment via the network payload serving such receiving user equipment. In particular, in the case of user equipment being served by a same network payload (typically, when two communicating user equipment are connected to a same satellite), a data path between such two user equipment includes a communication loop between the satellite and the Earth as the radio protocol is transmitted via the feeder link twice.

Such communication loop between the satellite and the Earth raises latency and data rate issues, since a radio protocol to be exchanged between two user equipment implies two transmissions via the feeder link. Such communication loop notably consumes backhaul resources and may generate overloads on the feeder link bandwidth. Moreover, the communication between user equipment heavily relies on the availability of the feeder link, even when such user equipment are connected to the same satellite or to interconnected satellites (for example via an Inter-Satellite Link or ISL). Thus, when the feeder link encounters bandwidth overloads, interruptions or switches, the communication between user equipment connected to the satellite communication network is interrupted or disrupted.

An alternative to existing communications protocols in order to address such Earth-satellite loop may for example involve embarking a full gNodeB and User Plan Function architecture onboard the satellite. However, such architecture implies considerably increasing the computational complexity as well as the implementation and maintenance costs, as it involves complexifying the satellite structure to be launched into orbit.

### Summary

This disclosure improves the situation.

In a first aspect of the disclosure, it is proposed a method performed by a non-terrestrial communication network for relaying a signal between at least a first user equipment and a second user equipment, a relaying user equipment being embarked on a network access device of the non-terrestrial communication network, the method comprising:
obtaining at least relaying assistance information related to an establishment of a sidelink communication mode between the relaying user equipment and at least a user equipment among the first user equipment and the second user equipment,
transmitting at least part of said relaying assistance information to at least the first user equipment and the second user equipment,
based on said relaying assistance information, establishing at least a first sidelink communication link between the relaying user equipment and the first user equipment, and
a second sidelink communication link between the relaying user equipment and the second user equipment,
relaying the signal between the first user equipment and the second user equipment via the first sidelink communication link and the second sidelink communication link using the established sidelink communication mode.

As a consequence, the present disclosure proposes a method for enabling a direct communication mode between user equipment connected to a non-terrestrial communication network.

In particular, the proposed method advantageously prevents communication loops and multiple transmissions going back and forth between the non-terrestrial access device (e.g., a satellite) and the Earth surface during signal transmissions between a first user equipment and a second user equipment both connected to the non-terrestrial communication network. Indeed, existing non-terrestrial networks provide connectivity between several end-users (notably user equipment) by transmitting radio protocols between access devices distant from the Earth surface (such as satellites or High Altitude Platform Stations - or HAPS -) and Earth-based structures, such as gateways and terrestrial base stations. In particular, even when a first user equipment and a second user equipment are covered by a same satellite beam footprint projected by satellite beams of a same satellite for example, a signal to be transmitted from a first user equipment to the second user equipment still require two transmissions in the feeder link between the satellite and the Earth-based gateway. Indeed, when the first user equipment transmits a data signal to a second user equipment, a typical communication path is the following:
- an uplink signal is transmitted from the first user equipment to the satellite via a service link,
- the satellite transmits the signal to an Earth-based gateway via a feeder link,
- the signal is forwarded from the gateway to the core network via the base station, to one or several network functions so that a response signal containing required data packets may be routed to the second user equipment,
- the response signal is transmitted to the satellite via the feeder link, and
- the satellite transmits the response signal to the second user equipment via the service link in a downlink signal.

The communication path between a first user equipment and a second user equipment thus raises latency and efficiency issues, as a signal transmission requires two transmissions via the feeder link, even when the first user equipment and the second user equipment are covered by a same satellite beam footprint. Moreover, such complex communication path heavily depends on the feeder link bandwidth and cases of feeder link saturation of failure may lead to interruptions of communications between end-users, thus affecting the reliability of the connectivity provided by the network.

An alternative to such complex communication path may be to embark a full base station and network functions such as the User Plane Function onboard the satellite, so that the access to the data network and resource allocation may occur at the access device level and to spare important amount of signaling between the Earth-satellite structure of the network. Yet, embarking a full base station and User Plane Function structure onboard a satellite requires a considerable amount of computational and storage resources to be embarked onboard the satellite, as well as an increasing amount of supplementary hardware to be put on orbit. Such alternative thus presents considerable drawbacks.

The present disclosure addresses such issues by proposing a sidelink communication mode between user equipment, in which transmissions between a first user equipment and a second user equipment may be spared from a complex communication path involving communication loops and several Earth-satellite transmissions as described. As a consequence, the communication between user equipment may be optimized in both latency and computational resource consumption, without requiring considerable and costly adjustments on the satellite structure.

The Third Generation Partnership Project (3GPP) 5G defines a direct (or sidelink) communication model in wireless communications in the context of Proximity Service (or ProSe) applications, in which terminals may communicate directly without involving network entities such as base stations. Such direct communication mode enables terminals having a geographic proximity to establish a device-to-device communication path, without having packets being transmitted to/from the core network via base stations. Such direct communication mode may also be referred to as "device-to-device" or "D2D" communication mode. Such direct communication mode may also be extended to specific use cases of a device acting as a relaying device between two terminals or between a terminal and the network. Such specific direct communication modes may also be respectively referred to as a "device-to-device relay" and "device-to-network relay" (or a "to-network relay service"). In the device-to device relay (respectively in the device-to-network relay), the relaying device may for example communicate with an out-of-coverage terminal via a direct communication mode and relay such transmission to another terminal via another direct communication mode (respectively to a network entity via a classic network-to-device communication mode).

Either in device-to-device communication or in device-to-network relay, direct communications between terminals generally require a phase of discovery by such terminals. Indeed, for each service (or application) to be served by terminals, the phase of discovery enables a terminal to detect other terminals nearby and/or nearby terminals to signal their presence. For example, in the case of a terminal acting as a relaying terminal, such relaying terminal may send announcement signals to indicate its relaying ability. In another example, terminals requiring relaying services may send request signals to indicate the required type of service relaying. The discovery phase of a direct communication mode thus usually involves a plurality of terminals transmitting a plurality of discovery signals (including announcement messages, request messages, respective response messages in response to such announcement and request messages) over the wireless communication network. Such discovery phase thus leads to a considering amount of signaling. However, in the context of short range communication (that is, terminals communication in D2D are geographically close), such amount of signaling may be acceptable as only a limited number of terminals is usually involved (e.g., only some terminals within a delimited neighborhood may perform D2D communications).

However, such existing direct communication model cannot be efficiently transposed as it is to the use cases of non-terrestrial communication networks such as satellite communication networks.

Indeed, in non-terrestrial communication networks, the context of Proximity Service (ProSe) application does not apply since user equipment, and more generally end-users, connected to a non-terrestrial communication network are not necessarily geographically close. Indeed, even in the case of several user equipment being connected to the non-terrestrial communication network via a same cell, such user equipment may still be geographically distant by hundreds of kilometers for example, depending on the size of coverage of the cell. Moreover, such cell being projected by a non-terrestrial access device such as a satellite, the number of end-users covered by such cell may be considerable. By considering having a specific user equipment embarked on the access device to act as a relaying device for all user equipment covered by a same cell projected by such access device, the direct communication model as known cannot efficiently apply. Indeed, the phase of discovery required in the direct communication model would involve a considerable amount of signaling within the non-terrestrial communication network. For example, when an embarked device intends to act as a relaying device for a multitude of Earth-located terminals, a large number of terminals may potentially be involved in the discovery, requiring a huge amount of signaling, and thus of resources.

Moreover, the non-terrestrial context involves complex considerations at the physical layer, which do not occur in the terrestrial context. For example, when connectivity is provided by a non-terrestrial structure, signaling requires taking into account the propagation delay between the user equipment and a network reference point, which may for example be located at the base station, at the satellite or between such two network entities for example. Such propagation delay in the non-terrestrial communication network signaling is taken into account by applying a timing advance to the signals. Yet, the existing direct communication model occurs without consideration about any timing advance to be applied in signaling between terminals.

In order to address the issue of latency and computational resource consumption in non-terrestrial communication networks, the present disclosure proposes to include an assistance-provided relaying user equipment onboard a network entity of the non-terrestrial communication network, such non-terrestrial relaying user equipment acting as a relay device for establishing a sidelink communication mode and for relaying signals between at least a first user equipment and a second user equipment based on provided relaying assistance information. Based on the proposed method, a sidelink communication mode is established, so that signals may be transmitted from the first user equipment to the second user equipment, without the communication path involving the base station and the core network. In particular, such communication path includes a relaying of the signal via the relaying user equipment. Advantageously, the proposed disclosure thus enables to optimize the communication path when transmitting a signal from a first user equipment to a second user equipment, by sparing a transmission loop at the core network level and by sparing several transmissions to be performed between the non-terrestrial network entity (e.g., the satellite) and the Earth surface via the feeder link.

Advantageously, the proposed method provides means for establishing such sidelink communication mode. Indeed, in existing non-terrestrial communication networks, signaling is performed on a network-to-device basis. In other words, in order to provide connectivity to end-users (for example, in order to provide access for signal transmissions between user equipment), control and/or data messages and packets are exchanged between the radio access network and the core network. In particular, existing transmissions require radio protocols to be transmitted to the core network and to core network functions and resources to be allocated by the base station managing cells serving the end-users. In the context of the present disclosure, the establishment of the sidelink communication provides an alternative communication mode between user equipment. To that end, the present disclosure proposes to rely on the non-terrestrial architecture of the network in order to establish the sidelink communication mode. In particular, the proposed establishment of the sidelink communication mode may be network aided. In other words, the non-terrestrial network infrastructure may be used to assist the non-terrestrial relaying user equipment, the first user equipment and the second user equipment to establish and use the sidelink communication mode.

Indeed, the existing direct communication model relies on a short range (or proximity) assumption. Thus, the establishment of a sidelink communication mode in a non-terrestrial communication network involving ground-satellite communication requires specific configuration and restriction considerations on different layers of the network protocol architecture, such as in the 5G protocol architecture.

The present disclosure proposes the transmission of relaying assistance information to at least the relaying user equipment. In particular, such relaying assistance may notably assist the relaying user equipment in establishing the sidelink communication mode. Such relaying assistance information may notably provide the relaying user equipment with information for the configuration of the sidelink communication mode, for example in terms of radio interface, resource allocation, access rights etc. Advantageously, such proposed relaying assistance information enables the relaying user equipment to act as a relaying device for the first user equipment and the second user equipment without requiring a discovery phase or any equivalent step where the relaying user equipment has to broadcast announcement messages. In other words, the present disclosure enables the sidelink communication mode to occur without requiring the extended broadcast of announcement messages between terminals which intend to participate in the sidelink communication. The relaying assistance information may for example contain information about eligible user equipment for which the relaying user equipment may relay signals. Thus, by receiving relaying assistance information, the relaying user equipment is spared from performing a discovery phase, thus enabling to limit the amount of signaling in the non-terrestrial communication network. Indeed, in the absence of relaying assistance information, the establishment of a sidelink communication between the relaying user equipment and user equipment on the end-user side would require a phase of discovery or any equivalent stage during which user equipment eligible for communicating via the sidelink communication are identified. Since the relaying user equipment is embarked on the (non-terrestrial) network entity and user equipment are either on the Earth surface or, more generally at a lower altitude with respect to the network entity (and thus to the relaying user equipment onboard), the establishment of sidelink communication between such embarked relaying user equipment and user equipment would require a great amount of signaling between the relaying user equipment and such user equipment. Thus, the provided relaying assistance information as proposed in the method enables to establish a sidelink communication mode between user equipment via a relaying user equipment in a non-terrestrial communication network, without requiring user equipment and the relaying user equipment to transmit a plurality of discovery messages such as announcement messages and/or request messages.

Moreover, the proposed relaying assistance information advantageously enables to adapt the establishment of the sidelink communication mode to the constraints of the non-terrestrial communication networks. Indeed, via the relaying assistance information, protocol information, radio interface information, configuration information, access information, resource allocation information, network information, physical layer information may be provided to the relaying user equipment for establishing the sidelink communication with the first user equipment and the second user equipment. Thus, by providing relaying assistance information to the relaying user equipment, the proposed method enables, in the non-terrestrial network context:
- a discovery (or an identification) of user equipment eligible to communicate in the sidelink communication mode,
- to provide information for establishing a radio interface between the relaying user equipment and each of the first and second user equipment for communicating in the sidelink communication mode,
- to provide protocol and configuration information for establishing a first sidelink communication link and a second sidelink communication link with the first user equipment and with the second user equipment respectively.

By a non-terrestrial communication network, it may be understood a space-borne and aerial communication network supported by a network infrastructure including non-terrestrial network entities. In particular, such non-terrestrial communication network is supported by at least one network access device. A network access device may refer to satellite constellations including one or several satellites. Such satellite constellation may be a Geostationary Orbit (or GEO), a Medium-Earth Orbit (or MEO) or a Low-Earth Orbit (or LEO) satellite. A network access device may also refer to High Altitude Platform Systems (or HAPS) or to Low Altitude Platform Systems (LAPS) for example.

By a relaying user equipment, it may be understood a relaying device configured for relaying signals from and/or to another user equipment. Such relaying user equipment may for example be a network-to-device relay, for relaying signals between another user equipment and a (non-terrestrial) network entity of the non-terrestrial communication network. Such relaying user equipment may also be a device-to-device relay, for relaying signals between at least a first user equipment and a second user equipment. In particular, the relaying user equipment is embarked onboard a network access device of the non-terrestrial communication network. By being embarked on the network access device of the non-terrestrial communication network, it may be understood that the relaying user equipment is located on the non-terrestrial network access device. The information received by the relaying user equipment may be related to an access network level and be communicated to the relaying user equipment as it is communicated to the network access device by the core network. For example, the relaying user equipment may receive information from the core network of the non-terrestrial communication network via the feeder link control channel linking a non-terrestrial network gateway and the access device (e.g., a satellite). In particular, the distance separating such relaying user equipment from another user equipment located on earth or near the earth surface and connected to the non-terrestrial communication network is by at least hundreds of kilometers (e.g., for LEO satellites), or by thousands of kilometers (e.g., for GEO satellites).

By a first user equipment and by a second user equipment, it may be understood end-user terminals which communications are supported by the non-terrestrial communication network. In other words, the first and second user equipment are connected to the non-terrestrial communication network via at least a cell or a coverage of an access device of the network. Thus, the first and second user equipment are located, at least for a predetermined time, in a coverage footprint of an access device (e.g., in a cell of satellite beam). The first and second user equipment may belong to same or different coverage footprints deployed by same or different access devices. Moreover, by being connected to the network, it may be understood that the first and second user equipment have performed a network access procedure, for example a RACH procedure or a handover procedure. The first and second user equipment are thus considered to be allocated radio resources (for example, in a configured or semi configured grant) for transmitting and/or receiving signals and/or messages supported by the non-terrestrial communication network. Notably, the first and second user equipment are configured to transmit uplink signals to the access device (or to their respective access devices) and to receive downlink signals from the access device (or from their respective access devices). Such uplink and downlink signals may be transmitted to/by the first and second user equipment via a Uu interface. In particular, the first and second user equipment are considered on or near the Earth surface. By near the Earth surface, it may be understood that the maximum distance separating the first or second user equipment and the Earth surface is approximately around ten kilometers. The first and second user equipment may for example be mobile terminals, phones, aircrafts.

By relaying a signal between the first user equipment and the second user equipment, it may be understood that the relaying user equipment serves as a relaying device for communications between the first user equipment and the second user equipment. The signal relayed between the first user equipment and the second user equipment may for example be a signal containing data packets to be transmitted from the first user equipment to the second user equipment.

By a sidelink communication mode, it may be understood a direct communication mode between user equipments, without having signals being handled by a base station. In particular, such direct communication mode may be understood as being served by a non-terrestrial communication network. In such proposed sidelink communication mode, signals are relayed from a user equipment to another user equipment via a relaying user equipment embarked on an access device of the non-terrestrial communication network. In particular, in such sidelink communication mode, signals transmitted from and/or to the user equipment do not require a communication loop between the Earth and the non-terrestrial access device (e.g., the satellite).

By an establishment of a sidelink communication mode between the relaying user equipment and a user equipment, it may be understood that both the relaying user equipment and the user equipment have received information and initiated a protocol for functioning in a direct communication mode. For instance, in the sidelink communication mode, the radio resources selected and used for transmitting signals are specific resources allocated to the sidelink communication mode, the radio interface used for transmitting signals is a PC5 interface distinct from the Uu interface, the feeder link control channel may be interrupted or unused.

By establishing a sidelink communication link, it may be understood a radio link setup for setting a radio interface between the relaying user equipment and the user equipment. The first and second sidelink communication links are notably used in the sidelink communication mode for transmitting signals between the relaying user equipment and the first user equipment and between the relaying user equipment and the second user equipment respectively. The establishment of the sidelink communication link may require providing both the relaying user equipment and the user equipment with PC5 setup configuration information. The establishment of the sidelink communication link may then be initiated by the transmission of a sidelink communication request (also referred to as a sidelink establishment request). Such sidelink establishment request may for example be initiated by the relaying user equipment or by the first or second user equipment.

By relaying assistance information, it may be understood information for establishing the sidelink communication mode in the non-terrestrial communication network. Such relaying assistance information may notably be provided to the relaying user equipment, the first user equipment, the second user equipment and/or any other user equipment in the non-terrestrial communication network eligible for communicating in the sidelink communication mode. Such relaying assistance information may be obtained based on knowledge, measurements, computations performed in the non-terrestrial communication network by one or several of its network entities such as base stations, access devices, core network entities. The relaying assistance information may include control assistance information related to conditions for switching to the sidelink communication mode. For example, such control assistance information may include timing, power, radio, network conditions to be satisfied for establishing the sidelink communication mode. The relaying assistance information may also include access assistance information for actually establishing the sidelink communication mode. Such access assistance information may notably include high level assistance information, such as user equipment access rights, sidelink identifiers, encryption keys, required Quality of Service (or QoS) level for accessing the sidelink communication mode. The access assistance information may also include low level assistance information, such as information related to the radio interface in the sidelink communication mode (e.g., the PC5 interface), PC5 setup configuration information, information for establishing the sidelink communication link. In particular, the relaying assistance information is specific to the non-terrestrial context. For example, as a difference with the existing context of direct communications in terrestrial networks, the relaying assistance information may provide assistance information for user equipment to compute a timing advance to be used for sending signals via the relaying user equipment in the sidelink communication mode. Moreover, the resource allocation, the signal transmission, the radio interface may also be specific to the non-terrestrial context.

By obtaining relaying assistance information, it may be understood determining, receiving and/or measuring the relaying assistance information. Such relaying assistance information may be obtained at punctual time(s), continuously or according to preconfigured timings managed by the network. Different parts of the relaying assistance information may be obtained at different timings and/or from different entities. Such relaying assistance information may be obtained as cell specific information or general system information.

By transmitting at least part of said relaying assistance information to the first and second user equipment, it may be understood that the first and second user equipment are provided with at least part of the relaying assistance information. For example, the first and second user equipment may be provided with assistance information for identifying the relaying user equipment to be used as a relay in the sidelink communication mode. The first and second user equipment may also receive assistance information providing conditions for accessing the relaying user equipment and for establishing the sidelink communication mode. The first and second user equipment may also receive configuration information related to physical resources allocated for communicating in the sidelink communication mode via the relaying user equipment. The first and second user equipment may also receive assistance information for computing a timing advance in the sidelink communication mode. The relaying assistance information may be transmitted to the first and second user equipment by the relaying user equipment, the base station(s) managing the cell(s) covering the locations of the first and second user equipment, a core network entity and/or any other network entity of the non-terrestrial communication network.

By relaying the signal via the first and second sidelink communication links using the established sidelink communication mode, it may be understood that the relaying user equipment is configured for relaying signals between the first and second user equipment, once the sidelink communication mode is established. In particular, the radio resources, radio interface, radio links based on the relaying assistance information are used for relaying the signal in the sidelink communication mode. The signal relaying may be performed based on a specific sidelink control information (or SCI) associated to the signal, so that the sidelink communication mode is used for relaying the signal.

According to an embodiment, the method or at least some steps of the method is performed by the relaying user equipment.

As a consequence, the method proposes including a relaying user equipment onboard the network access device, and possibly relying on such relaying user equipment for establishing the sidelink communication mode. In particular, when the proposed method or at least is some steps of the method are performed by the relaying user equipment, the relaying assistance information may be received by the relaying user equipment from the rest of the communication network. Optionnally, part of such relaying assistance information may then be transmitted (or forwarded) to the first and second user equipment as relayed assistance information. Network entities of the non-terrestrial communication network may provide the relaying user equipment with assistance information so that the relaying user equipment may manage the establishment of the sidelink communication mode with at least the first user equipment and the second user equipment, and more generally with user equipment eligible for communicating in the sidelink communication mode.

According to an embodiment, the method further comprises:
based on said relaying assistance information, initiating at last one link among the first sidelink communication link and the second sidelink communication link.

As a consequence, the first sidelink communication link and/or the second sidelink communication may be established with the non-terrestrial communication network initiating such establishment. Advantageously, based on the obtained relaying assistance information, the first and/or second sidelink communication link may be initiated. For example, based on the received relaying assistance information containing identifiers of the first user equipment and/or of the second user equipment, as well low level setup configuration of the sidelink communication interface (e.g., the PC5 radio interface), the relaying user equipment embarked on the non-terrestrial access device may initiate the sidelink communication link with the first and/or the second user equipment.

By initiating a sidelink communication link, it may be understood transmitting a sidelink communication request (also referred to as a sidelink establishment request) for requiring the establishment of the first and/or second sidelink communication link respectively. In order to initiate the sidelink communication request, the device initiating the sidelink communication link may be provided with identifiers (e.g., PC5 or sidelink identifiers) of the first and/or the second user equipment and with PC5 setup configuration, for example in the relaying assistance information.

According to an embodiment, the method further comprises:
transmitting additional assistance information to at least one user equipment among the first user equipment and the second user equipment, said additional assistance information being related to the non-terrestrial communication network.

According to such embodiment, the additional assistance information comprise at least one element among:
- system information blocks, SIB, related to the non-terrestrial communication network,
- data related to satellite ephemerides in the non-terrestrial communication network,
- reference signals related to a network communication interface used in a network communication mode,
- data related to the network communication mode,
- data related to a termination of the sidelink communication mode,
- data related to radio link failure, RLF, recovery, and
- data related to at least one cell projected by the network access device and covering said at least one user equipment.

As a consequence, the method proposes to provide user equipment with further assistance information related to the network, so that the user equipment may advantageously keep an updated synchronization with the network even in the sidelink communication mode. Such additional assistance information may notably enable the user equipment to still maintain communications via the network radio interface (e.g., the Uu radio interface), for example in order to communicate with other devices not eligible to communicate in the sidelink communication mode (e.g., other user equipment not covered by the same network access device).

Advantageously, the transmission of additional assistance information enables the user equipment to concurrently use the sidelink communication mode (via the relaying user equipment) and a network communication mode (via the classic network infrastructure including notably the core network, the base station, uplink and downlink transmissions). The user equipment are provided with additional assistance information so that they are provided up-to-date knowledge about the non-terrestrial communication network. In particular, it enables the user equipment to receive such knowledge, even when the feeder link is unavailable.

By additional assistance information, it may be understood assistance information provided to at least the first user equipment and the second user equipment, for providing updated knowledge about the non-terrestrial communication network. Such additional assistance may for example include information to maintain synchronization with the network, information related to the network communication interface (e.g., the Uu radio interface), information for switching between the sidelink communication mode and the network communication mode, information related to the network constellations (e.g., ephemerides of satellite constellations), information for recovering a network communication link (e.g., a Uu link) or a feeder link following a radio link failure (or RLF).

By a network communication mode, it may be understood a communication structure on the non-terrestrial communication network in which communications of the user equipment are managed by the base station, with uplink and downlink signals being exchanged between user equipment and the access device, the signals being then forwarded via the gateway, the base station and to the core network via the user plane function. In particular, in such network communication mode, several communications loop between the non-terrestrial access device and the Earth occur, as the signaling is managed by the core network, the base station and/or other network entities. For example, in the network communication mode, the radio resources allocated to user equipment for transmitting signals are managed by the base station managing the cell covering the location of such user equipment. In such network communication mode, the user equipment may receive broadcasted message from the non-terrestrial communication network, for example with broadcasts of SIB. Such broadcasted messages may for example be cell-specific.

By data related to the network communication mode, it may then be understood assistance information related to the network infrastructure and radio conditions for transmitting signals in the network communication mode, via the network communication interface (e.g., the Uu radio interface).

By data related to a termination of the sidelink communication mode, it may be understood information enabling the user equipment to have knowledge about when and how the sidelink communication mode will end and how the switch back to the network communication mode may occur. For example, such data may be timing and/or radio conditions for accessing the sidelink communication mode. Such data may notably depend on the satellite ephemerides and the orbit of the access devices of the network, on the radio properties of the relaying user equipment.

By data related to radio link failure recovery, it may be understood assistance information provided to the user equipment for recovering failed radio links to be used in the network communication mode. For example, the sidelink communication mode may be provided as an alternative communication solution to ensure a communication continuity during a radio link failure. During such radio link failure, the user equipment may then receive additional assistance information via the sidelink communication mode enabling a radio link recovery.

By data related to at least one cell projected by the network access device, it may be understood cell-specific assistance information provided to user equipment covered by such cell. Such data may correspond to radio resource allocation information, radio conditions within the cell, upcoming cell switch requiring the user equipment to perform handover or cell re-selection procedures, timing advance updates in the cell etc.

In particular, when the proposed method is performed by the relaying user equipment, the additional assistance information may be provided to the user equipment via the established sidelink communication links. The relaying user equipment may thus transmit such additional assistance information, including notably reference signals specific to the network communication mode, in the sidelink communication mode, on behalf of the base station or the core network for example. Thus, via the relaying user equipment, the user equipment may still receive system information such as ephemerides, complementary synchronization information, information for radio link recovery, even when the network communication interface and/or the feeder link is unused or unavailable.

According to an embodiment, the relaying assistance information includes control assistance information related to an indication to switch between the network communication mode and the sidelink communication mode.

As a consequence, the relaying assistance information may provide timing and/or radio conditions for adopting a specific communication mode. In particular, the control assistance information may be a binary information indicating that the user equipment may switch from the network communication mode to the sidelink communication mode or *vice versa.*

By switching to a communication mode, it may be understood adopting specific radio resources, timing advance, communication protocols and adapting radio signaling to transmit signals. For example, when transmitting signals in the network communication mode, the radio resources to be used for transmitting signals may depend on the base station resource management, the radio interface to be used is the network communication interface (typically, the Uu radio interface), the timing advance to be used depend on the relative positions of the access device, the user equipment, the base station, a reference point between the base station and the access device. When transmitting signals in the sidelink communication mode, the radio resources, the timing advance to be used for transmitting signals depend on the content of the relaying assistance information and the location of the relaying user equipment for example. Moreover, the transmissions may include a sidelink control information (or SLI) specifically adapted to the non-terrestrial context, for example by including the identifier of the relaying user equipment in the SCI for signal transmissions. Thus, by switching to a communication mode, it is referred to relying on specific assistance information provided by the non-terrestrial communication network to adapt signaling of the user equipment.

According to an embodiment, the relaying assistance information includes access assistance information related to data identifying user equipment connected to the non-terrestrial network and eligible to communicate with the relaying user equipment via the sidelink communication mode.

As a consequence, the relaying assistance information may advantageously enable to identify devices which may transmit and/or receive signals via the sidelink communication mode. Thus, when such access assistance information is obtained by the relaying user equipment, such access assistance information may provide a list of eligible user equipment to the relaying user equipment. Thus, the relaying user equipment will relay signals from/to user equipment whose identifiers belong to such list. When such access assistance information is provided to a given user equipment, such user equipment has knowledge about its opportunity to access the sidelink communication mode, as well as to the other user equipment which may communicate with the given user equipment in the sidelink communication mode.

By user equipment eligible to communicate with the relaying user equipment via the sidelink communication mode, it may be understood user equipment which coverage enables to access the sidelink communication mode using the relaying user equipment as a relay. For example, such eligible user equipment may refer to all devices covered by a same access device embarking the relaying user equipment. Such eligible user equipment may include devices covered by different access devices linked by an intersatellite link (or ISL), one of such different access devices embarking the relaying user equipment. Such eligible user equipment may also include devices having the radio capabilities, the Quality of Service level, the service priority level or any other service or radio conditions for accessing the sidelink communication mode.

By access assistance information, it may be understood high level and low level assistance information for accessing the sidelink communication mode. Such access assistance information may thus include identifiers of eligible user equipment, encryption keys for the signaling in sidelink communication mode. Such access assistance information may also include radio information for establishing the sidelink communication link or the sidelink communication interface, such as PC5 setup configuration information.

According to an embodiment, the relaying assistance information, for example the access assistance information, includes at least one element among:
- setup configuration information for establishing a sidelink communication interface of the sidelink communication mode,
- data related to a timing advance to be applied by at least the first user equipment and the second user equipment in the sidelink communication mode, and
- data related to resource allocation for the sidelink communication mode.

According to an embodiment, further comprising, before relaying the signal:
receiving a sidelink communication request from at least the first user equipment,
based on the relaying assistance information and said sidelink communication request, establishing the first sidelink communication link.

As a consequence, the method proposes to establish the sidelink communication mode on the initiative of the user equipment. Such embodiment advantageously enables the network to remain passive and to save computational resources regarding the establishment of the first sidelink communication link. In particular, the method proposes to provide relaying assistance information to the first user equipment so that such sidelink communication request may be initiated on the first user equipment side at a timing chosen by such first user equipment. For example, by providing the first user equipment with identifiers of the relaying user equipment as well as with sidelink setup configuration information, the establishment of the first sidelink communication link may be initiated by the first user equipment.

In another aspect of the disclosure, it is proposed a non-terrestrial communication network including at least a network access device embarking a relaying user equipment, the network being configured for performing the method as proposed.

In another aspect of the disclosure, it is proposed a relaying user equipment embarked on a network access device of the non-terrestrial communication network, said relaying user equipment being configured for performing the method as proposed, such method being then referred to as the relaying method when being performed by the relaying user equipment.

In another aspect of the disclosure, it is proposed a network access device, preferably a satellite, included in a non-terrestrial communication network and embarking a relaying user equipment, said network access device including at least a network communication, Uu, interface and a sidelink communication, PC5, interface, said network access device being configured to perform the method as proposed.

In another aspect of the disclosure, it is proposed a computer-readable non-transient recording medium on which a software is registered to implement the method when the software is executed by a processor.

In a second aspect of the disclosure, it is proposed a communication method performed by a first user equipment for transmitting a signal to at least a second user equipment in a non-terrestrial communication network, the communication method comprising:
receiving user assistance information related at least to an establishment of a sidelink communication mode with at least a relaying user equipment,
based on at least said user assistance information, establishing a first sidelink communication link with said relaying user equipment,
transmitting the signal to the second user equipment via said established first sidelink communication link.

As a consequence, the proposed communication enables a user equipment (referred here as the first user equipment) to access a sidelink communication mode, in which signals may be transmitted in a direct communication mode, using the relaying user equipment as a relay. Such sidelink communication mode enables to avoid several communication loops between the non-terrestrial access device, typically the satellite, covering the first user equipment and the Earth, thus enabling to reduce the Round Trip Time (or RTT) of transmissions and thus improve the service latency of the user equipment. Moreover, such communication method advantageously provides an alternative to classic network communication mode involving signaling with the base station, the core network and in which such communication loops occur. Such alternative is also advantageously useful in cases of radio link failure (or RLF), Uu link failure, saturation of the feeder link etc., which lead to interruptions or delays of signal transmissions in the non-terrestrial communication link.

In particular, in the non-terrestrial context, the establishment of such sidelink communication mode is made possible by providing the first user equipment (and more generally the user equipment accessing the sidelink communication mode) with user assistance information. Such user assistance information may for example be provided by a network entity of the non-terrestrial communication network or by the relaying user equipment. Such user assistance information notably enables the first user equipment to perform a network-assisted procedure for accessing such sidelink communication mode. Advantageously, by relying on such user assistance information as proposed, the access to a sidelink communication mode is made possible in the context of a non-terrestrial communication network, in which classic discovery or resource sensing phases existing in terrestrial D2D communications would be too time and/or resource-hungry and/or would not enable to satisfy the service requirements of most 5G applications served by user equipment notably in terms of data throughput rates or latency for example.

By user assistance information, it may be understood assistance information provided to the first user equipment for accessing the sidelink communication mode. The user assistance information may for example corresponds to part of the relaying assistance information as obtained by the network in the method of the first aspect of the present disclosure. Such user assistance information may be received by the first user equipment from the relaying user equipment, the base station, a core network entity, any other network entity, from several of the previous entities or more generally from the non-terrestrial communication network. Such user assistance information may provide knowledge of an opportunity to access the sidelink communication mode, radio, and/or timing conditions for such access, link setup information for accessing the communication interface for such access, timing advance to be used for transmitting signals in the sidelink communication, identifying information of the relaying user equipment, resource allocation procedure to perform for such access.

Similarly, the second user equipment and more generally, any user equipment eligible to access the sidelink communication mode may receive such user assistance information or part of such user assistance information.

According to an embodiment, the communication method further comprises:
based on at least said user assistance information, initiating the first sidelink communication link with said relaying user equipment by emitting a sidelink communication request.

As a consequence, the communication method proposes to provide user assistance information to the first user equipment so that such first user equipment may initiate the first sidelink communication link to access the sidelink communication mode. For example, by including identifiers of the relaying user equipment as well as PC5 link setup configuration information in the user assistance information, the first user equipment may initiate the first sidelink communication link by emitting a sidelink communication request to the relaying user equipment. In particular, the timing of such emission may be chosen by the user equipment depending on its requirements and capabilities, providing that the timing conditions for accessing the sidelink communication mode are satisfied.

According to an embodiment, the communication method further comprises:
receiving additional assistance information related to the non-terrestrial communication network.

As a consequence, concurrently to accessing the sidelink communication mode and transmitting signals in such sidelink communication mode, the first user equipment may still update its knowledge about the non-terrestrial communication network, get synchronization with the Uu radio interface, so that the network communication mode may still be used (or remain up-to-date on the user equipment side) concurrently to the sidelink communication mode.

According to an embodiment, the user assistance information includes at least data related to an identification of the relaying user equipment.

According to an embodiment, the user assistance information includes at least one element among:
- setup configuration information for establishing a sidelink communication interface of the sidelink communication mode,
- data related to a timing advance to be applied in the sidelink communication mode,
- data related to resource allocation for the sidelink communication mode.

According to an embodiment, part of the user assistance information is received in the sidelink communication mode.

For example, such part of the user assistance information may be received from the relaying user equipment, after such relaying user equipment initiates the first sidelink communication link by emitting a sidelink communication request to the first user equipment.

By receiving information in the sidelink communication mode, it may be understood receiving information once the sidelink communication mode is established. Such sidelink communication mode may be established once a first signal corresponding to the sidelink establishment request has been emitted from one end-device of the sidelink communication link to the other end-device of the sidelink communication link.

According to an embodiment, the communication method further comprises:
- exchanging, with the relaying user equipment, data related to an establishment of a second sidelink communication link between the relaying user equipment and the second user equipment,
and wherein the transmission of the signal to the second user equipment further relies on the second communication link.

Advantageously, the first user equipment may be involved in the establishment of the second sidelink communication link between the second user equipment and the relaying user equipment. For example, the data related to an establishment of a sidelink communication link exchanged between the first equipment and the relaying user equipment may be a message from the first user equipment to the relaying user equipment requesting a sidelink communication mode with the second user equipment (and thus requesting the establishment of the second sidelink communication link). Such data may also be an information provided by the relaying user equipment to the first user equipment to inform the first user equipment that the second user equipment is an eligible user equipment for the sidelink communication mode and/or that the second sidelink communication link is established and effective for transmitting a signal to the second user equipment via the sidelink communication mode.

In another aspect of the disclosure, it is proposed a first user equipment connected to a non-terrestrial communication network and configured for performing the communication method as proposed.

In another aspect of the disclosure, it is proposed a computer-readable non-transient recording medium on which a software is registered to implement the communication method when the software is executed by a processor.

In another aspect of the disclosure, it is proposed a switching method performed by a network entity for establishing a communication switch in a non-terrestrial communication network for a signal between a first user equipment and a second user equipment, said communication switch being performed between a network communication mode and a sidelink communication mode, said switching method comprising:
determining a relaying user equipment associated to at least the first user equipment and the second user equipment for relaying a signal between the first user equipment and the second user equipment,
determining network assistance information related to at least an establishment of the sidelink communication mode,
transmitting, via the network communication mode, at least part of said network assistance information to the relaying user equipment,
establishing a communication switch between the network communication mode and the sidelink communication mode based on at least said network assistance information.

As a consequence, the switching method enables, in a non-terrestrial communication network, to determine an opportunity to establish a sidelink communication mode between user equipment connected to such network, via a relaying user equipment. The switching method thus proposes to determine or identify a relaying user equipment able to relay signals between the first and second user equipment. The switching method also enables to provide a procedure for enabling the switch of all involved user equipment to the sidelink communication mode. Such procedure is notably specific to the non-terrestrial context. To that end, the switching method advantageously includes determining network assistance information in order to assist both the identified relaying user equipment and the user equipment eligible to access the sidelink communication mode in accessing the sidelink communication mode.

By a network entity, it may be understood a non-terrestrial entity of the non-terrestrial communication network. Such network entity may for example be an access device, a satellite, a base station, or gNodeB (or gNB), an entity of the core network, an entity of the Session Management Function (or SMF). Such network entity is not the relaying user equipment, the first user equipment, the second user equipment or any user equipment connected to the network.

By network assistance information, it may be understood assistance information determined by the network entity related to the establishment of the sidelink communication mode. Such network assistance information may refer to any information measured, determined, computed, estimated by the network entity based on signaling in the non-terrestrial communication network, core knowledge of the core network, preconfigured information of the network. Such network assistance information may for example include knowledge about access association between base stations and access devices, about cell coverage, satellite ephemerides, a dynamic or semi-static mapping between base stations and the access type provided by such base station, configuration information from Operation and Maintenance Function (OAM). The network assistance information may also be determined by different entities of the non-terrestrial communication network. The part of the network assistance information transmitted to the relaying user equipment may correspond to the relaying assistance information obtained in the method of the first aspect of the disclosure.

By determining a relaying user equipment associated to at least the first user equipment and the second user equipment, it may be understood identifying a relaying user equipment onboard a network access device eligible to act as a relay between the first and second user equipment. Such determination may depend on the respective locations, capabilities, requirements, of the first user equipment, the second user equipment and the relaying user equipment. The relaying user equipment may be identified by identifiers of the relaying user equipment, such identifiers enabling devices to communicate with such relaying user equipment by including its identifiers to the transmitted signal (after potential identification protocols, such as exchanges of encryption keys for example).

By establishing a communication switch between the network communication mode and the sidelink communication mode, it may be understood that the network entity registers the switch between two communication mode. The network thus has knowledge that the involved user equipment, including the relaying user equipment, the first user equipment and the second user equipment will switch to resource allocation procedure and signaling properties specific to the sidelink or network communication mode. In particular, by establishing such communication switch, it enables to update the knowledge of the non-terrestrial communication network about the radio situation of the network, such as the congestion level in different access channels, the saturation level in the feeder link, the bandwidth saturation level, thus improving the management of radio resources and capabilities of the non-terrestrial communication network. Such knowledge may also enable the network entity to manage the use of the sidelink communication mode, the network communication mode or both, depending on the requirements, capabilities and overall radio situation in the network.

According to an embodiment, the switching method further comprises:
transmitting, via the network communication mode, user assistance information to at least the first user equipment and the second user equipment. In such embodiment, the communication switch of the switching method may be established based on the network assistance information and/or the user assistance information.

As a consequence, the network entity may provide the first and second user equipment with user assistance information related at least to the establishment of the sidelink communication mode, as proposed in the second aspect of the present disclosure. Such user assistance information may notably be transmitted to the first and second user equipment using a network communication interface, such as the Uu radio interface.

According to an embodiment, the switching method further comprises:
transmitting additional assistance information to at least one among the relaying user equipment, the first user equipment and the second user equipment, said additional assistance information being related to the non-terrestrial communication network.

As a consequence, concurrently to the establishment of the sidelink communication mode, the switching method may provide user equipment with additional assistance information, enabling to keep the user equipment updated about the non-terrestrial communication network.

According to an embodiment, the relaying user equipment is embarked on a first network access device of the non-terrestrial communication network and said relaying user equipment is determined depending on at least:
- a coverage zone of the first user equipment and the second user equipment by at least said first network access device,
- an inter-satellite link, ISL between at least said first network access device and a second network access device of the non-terrestrial communication network covering at least one of the first user equipment and the second user equipment.

As a consequence, the relaying user equipment is advantageously determined depending on the coverage conditions of the first and second user equipment, as well as on the propagation conditions and properties between the first and the second user equipment and the relaying user equipment.

In another aspect of the disclosure, it is proposed a network entity of a non-terrestrial communication network configured for performing the switching method as proposed.

In another aspect of the disclosure, it is proposed a computer-readable non-transient recording medium on which a software is registered to implement the switching method when the software is executed by a processor.

### Brief Description of Drawings

Other features, details and advantages will be shown in the following detailed description and on the figures, on which:
**Fig. 1**

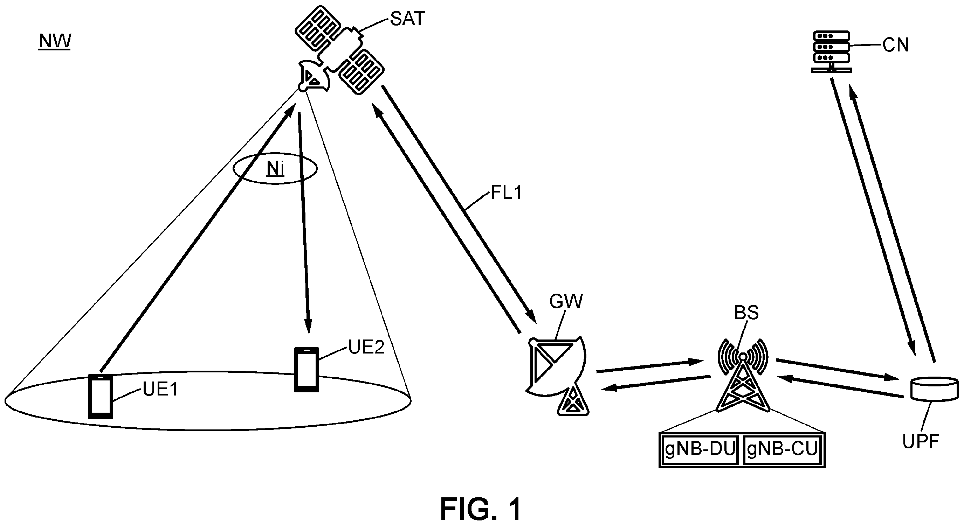

   [Fig. 1] is an example of part of a satellite communication network according to prior art.
**Fig. 2**

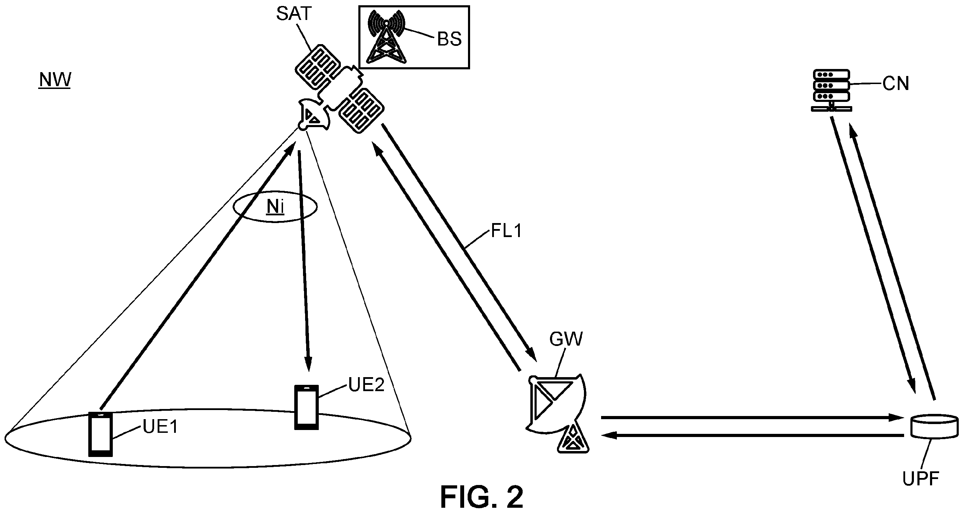

   [Fig. 2] is another example of part of a satellite communication network according to prior art.
**Fig. 3**

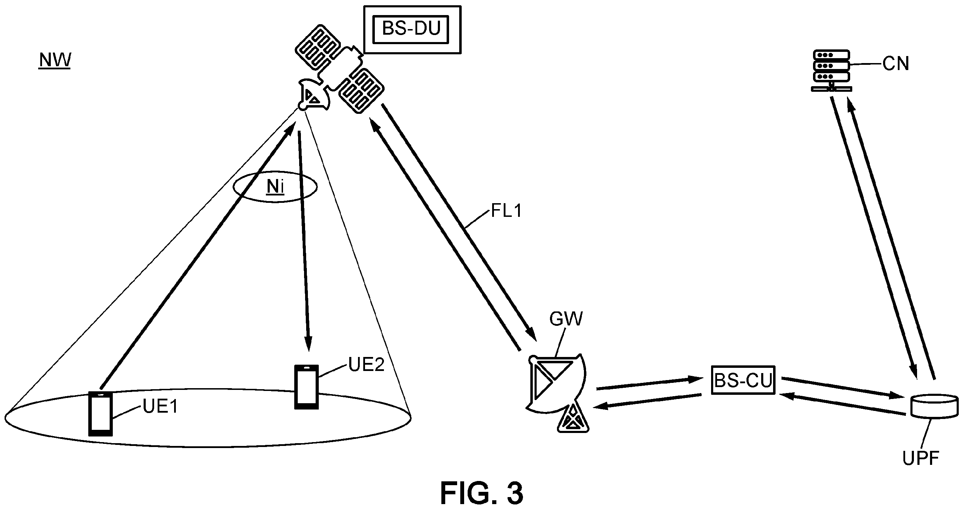

   [Fig. 3] is another example of part of a satellite communication network according to prior art.
**Fig. 4**

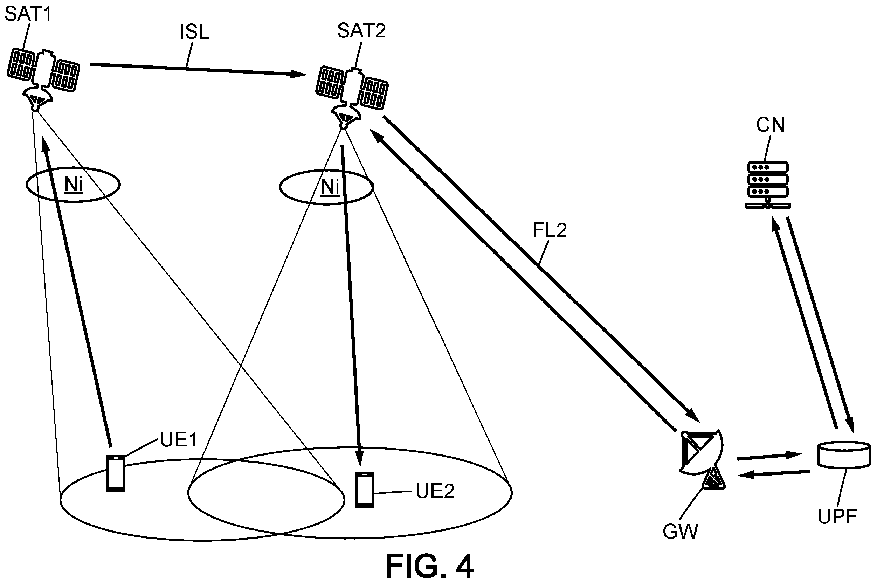

   [Fig. 4] is another example of part of a satellite communication network according to prior art.
**Fig. 5**
   is part of a satellite communication network using a sidelink communication mode according to an embodiment.
**Fig. 6**

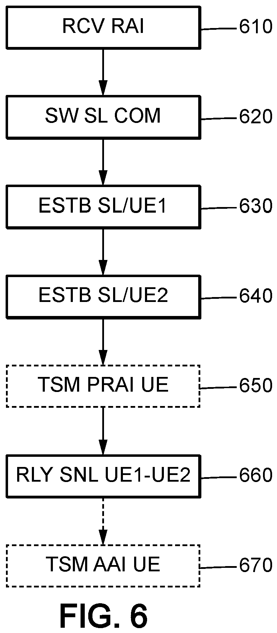

   [Fig. 6] is a flowchart showing steps of a relaying method according to an embodiment.
**Fig. 7**

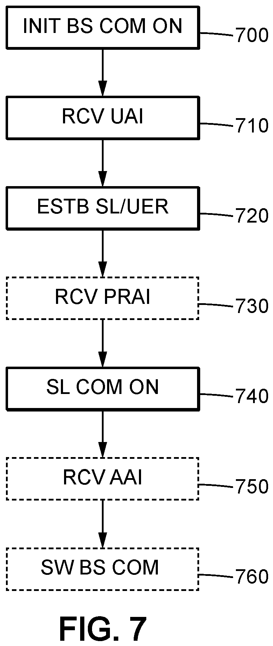

   [Fig. 7] is a flowchart showing steps of a communication method according to an embodiment.
**Fig. 8**

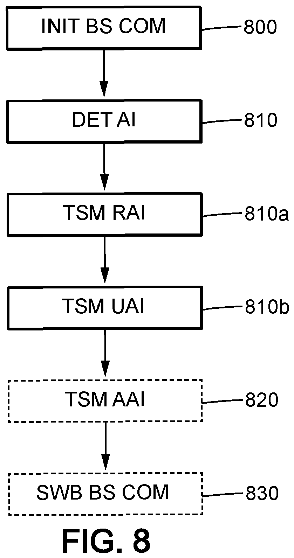

   [Fig. 8] is a flowchart showing steps of a method for relaying a signal according to an embodiment.
**Fig. 9**

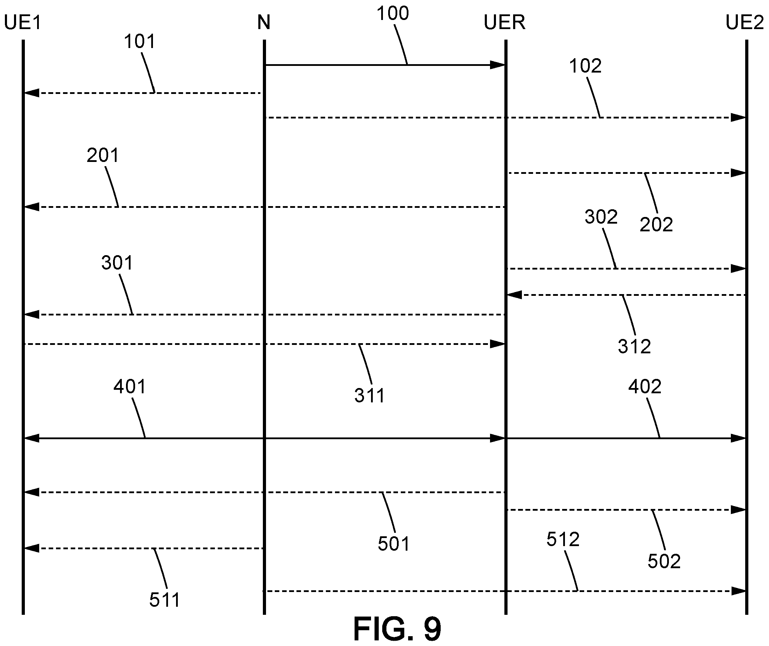

   [Fig. 9] shows steps summarizing a method for relaying a signal according to an embodiment.

### Description of Embodiments

It is now referred to figures 1, 2 and 3. Figures 1 to 3 represent embodiments of part of a non-terrestrial communication network. The present disclosure is not limited to any specific standard used for such network, however, for the sake of simplicity, the present disclosure will be described in the context of the Fifth Generation New Radio (or 5G NR) standard. In particular, such non-terrestrial communication network may be a satellite communication network NW.

Referring to figures 1 to 3, such non-terrestrial communication network NW may include at least one network entity. Such network entity may for example be an access device. Such access device may for example be a satellite SAT. Such satellite SAT may be deployed in a Non-Geostationary Satellite Orbit (or NGSO) such as a Low-Earth Orbit (LEO) or Medium-Earth Orbit (MEO). The satellite SAT thus has an altitude between 300 kilometers and 30,000 kilometers with respect to the Earth surface. In another embodiment, the satellite communication network NW may include several satellites SAT1, SAT2, as represented on figure 4. In particular, the several satellites SAT1, SAT2 may be linked via an Inter-Satellite Link (or ISL), as represented on figure 4. In another embodiment (not represented on the figures), the access device of the non-terrestrial communication network NW may include a High-Altitude Platform Station - or High-Altitude Pseudo Satellite, or HAPS -. The network entity may also refer to other network devices such as gateways, base stations, core network entities as further detailed for example. The term network entity may be understood as an entity of the non-terrestrial communication network NW, and does not refer to end-user devices (e.g., user equipment). The present disclosure details embodiments based on a non-terrestrial communication network NW corresponding to a satellite communication network and an access device of the non-terrestrial communication network NW corresponding to a satellite SAT. In other embodiments, other access devices providing connectivity (e.g., HAPS) may be considered.

The satellite SAT deploys at least one satellite beam projecting respective beam footprints on the Earth surface, such beam footprints forming one or several cells. For example, referring to figures 1 to 4, each satellite SAT, SAT1, SAT2 deploys one satellite beam. The satellite beam is configured in a specific frequency band so that the satellite SAT may transmit and receive data via the satellite beam according to radio resources allocated in the frequency band configured for the satellite beam. These radio resources may be shared according to a frequency division scheme (for example, Frequency Division multiplexing (FDM) or Orthogonal frequency-division multiplexing (OFDM)) or by a time division scheme (for example, Time-division multiplexing (TDM)) or code division scheme (code division multiplexing (CDM)), polarization multiplexing, or a combination thereof.

The allocation of the radio resources of the satellite beam is achieved by at least one base station BS, also referred to as gNodeB or gNB. Each base station BS manages the radio resources of one or several satellite beams. In particular, in the context of 5G NR communication standard, the base station BS may include two distinct entities being the Centralized Unit (also referred to as CU or gNB-CU) and Distributed Unit (also referred to as DU or gNB-DU). The Centralized Unit of the base station BS may be configured to support protocol layers of the network NW such as the Radio Resource Control (or RRC) layer, the Service Data Adaptation Protocol (or SDAP) and the Packet Data Convergence Protocol (or PDCP). Such RRC, SDAP, PDCP protocol layers are referred to as upper protocol layers (or higher protocol layers) with respect to lower layer protocols such as the Radio Link Control (or RLC), the Medium Access Control (or MAC) and the Physical Layer (PHY). Suh lower layer protocols may be supported by the Distributed Unit of the base station BS. A Distributed Unit of the base station BS may manage one or several satellite beams and the Control Unit of a base station BS may support multiple Distributed Units of the base station BS.

In an embodiment, the full base station BS (that is, both the gNB-CU and gNB-DU) may be physically distinct and distant from the satellite SAT. For example, such base station BS may be located on the Earth surface, as represented on figure 1. In such embodiment, the satellite SAT may be referred to as having a transparent payload (also referred to as having a bent-pipe structure). In other words, the satellite SAT may not have any substantial processing capability and relays the radio protocols from/to the satellite beams from/to the Earth-based base station BS.

The base station BS may also be located onboard the satellite SAT. In an embodiment, the full base station BS (that is, both the gNB-CU and gNB-DU) may be embarked on the satellite SAT, as represented on figure 2. In another embodiment, the Distributed Unit of the base station BS may be embarked on the satellite SAT while the Control Unit of the base station BS may be on the Earth surface, as represented on figure 3. In such embodiments where the satellite SAT embarks part or full of the base station BS, the satellite SAT may be referred to as having a regenerative payload.

The satellite SAT may also be linked to at least one ground station, also referred to as a gateway node or gateway GW, via a feeder link FL1. Such gateway GW may be located on the Earth surface, as represented on figures 1 to 3. The gateway GW, acting as the feeder link FL1 interface, may interface the Radio Access Network (or RAN) with the 5G core network (or CN) when the base station BS is onboard the satellite SAT, as represented on figure 2. The gateway GW may also interface the physical layer of the user equipment UE1, UE2 when the base station BS is located on Earth. The gateway GW may interface the satellite SAT and more generally, the satellite access network with the 5G network functions located on Earth. The network functions may notably include the User Plane Function UPF, as represented on figures 1 to 3. In particular, the User Plane Function UPF may be configured to interconnect the radio access network with the data network (or DN), to route packets and forward data packets, depending on preconfigured parameters and measurements such as the available capacity, the network NW policy, link performance and/or on the type of the end-user profile using such packets.

The satellite communication network NW may provide connectivity to a plurality of devices including user equipment UE1, UE2. The user equipment UE1, UE2 may be covered by one or several satellite beam footprints. For example, referring to figures 1 to 3, user equipment UE1 and user equipment UE2 are covered by a same cell projected by the satellite SAT. In another example, referring to figure 4, user equipment UE1 is covered by a first cell projected by the satellite SAT1 and user equipment UE2 is covered by a second cell projected by satellite SAT2. The cell covering a user equipment UE1, UE2 may be referred to as the serving cell. When a user equipment UE1, UE2 is connected to a serving cell, the user equipment UE1, UE2 may be allocated radio resources by the corresponding base station BS managing radio resources of the serving cell. The user equipment UE1, UE2 may be in a connected (RRC_CONNECTED) state via the serving cell. To that end, the user equipment UE1, UE2 may access to the satellite communication network NW via an initial access, for example via a Random Access (or RACH) procedure to a serving cell of the satellite communication network NW. The user equipment UE1, UE2, may also access to the satellite communication network NW via a handover procedure, for example when the user equipment UE1, UE2 was connected to another cell and switches to the serving cell. The user equipment UE1, UE2 may notably remain connected to the satellite communication network NW by accessing several successive cells of the satellite communication NW, notably due to the non-geostationary orbit nature of the satellite SAT leading to moving satellite beam footprints of the Earth surface and/or to the movement of the user equipment UE1, UE2.

In the connected state, the user equipment UE1, UE2 may be able to transmit control signaling and/or traffic data to the base station BS. For example, the user equipment UE1, UE2 may perform data transmissions, send Scheduling Requests (or SR) and/or send Buffer Status Reports (or BSR) to the base station BS. The user equipment UE1, UE2 may be able to perform uplink transmissions.

The transmissions performed between the user equipment UE1, UE2 and the satellite SAT (or more generally, with a network access device) notably occur on a service link via a network communication interface, also referred to a network communication interface Ni. Such network communication interface Ni may notably refer to a Uu interface.

The traffic data and signaling to be transmitted by the user equipment UE1, UE2 may aim to serve various services, notably in the context of Enhanced Mobile Broadband (eMBB), Massive Machine Type Communications (mMTC) or Ultra Reliable and Low Latency Communication (URLLC) use cases. Such services served by the user equipment UE1, UE2 have Quality of Service (or QoS) requirements, notably regarding reliability and latency. The user equipment UE1, UE2 may transmit buffered traffic data to the base station BS and/or various signals (such as SR and BSR signals) before transmitting traffic data. The services served by the user equipment UE1, UE2 may also involve user equipment UE1, UE2 communicating with each other.

In the connected state, the user equipment UE1, UE2 is also able to receive signals from at least the base station BS, from the core network CN and/or from any other network entity. As aforementioned, such network entity may refer to a base station, a satellite or any other entity on the network side. For example, the user equipment UE may receive system information (or SI), control information, network commands and/or data signals. For example, the user equipment UE1, UE1 may receive System Information Blocks (or SIB) from various network entities via the cell(s) covering the location of the user equipment UE1, UE2. The user equipment UE1, UE2 may receive network information related to satellite ephemeris, epoch times, radio resource configuration information, cell-related information. The user equipment UE1, UE2 is able to receive downlink transmissions. The user equipment UE1, UE2 may also receive command (or orders) and adjustment information from a network entity. In particular, the user equipment UE may receive Timing Advance Commands (or TAC) via the Medium Access Control (or MAC) layer, also referred to as MAC-CE TAC (or MAC Control Element Timing Advance Command).

In particular, referring to embodiments of figures 1 to 3, it is considered a first user equipment UE1 and a second user equipment UE2 connected to the satellite communication network NW via the cell projected by the satellite SAT. In particular, when the first user equipment UE1 and the second user equipment UE2 intend to establish a communication protocol - for example when a first user equipment UE1 intends to transmit a communication signal such as a data signal to a second user equipment UE2 - the typical communication path is represented on each of figures 1 to 3 by the several bold arrows. Such communication path successively includes :
- an uplink signal from the first user equipment UE1 to the satellite SAT1 via the network communication interface Ni,
- a transmission from the satellite SAT to the gateway GW on the Earth surface via the feeder link FL1,
- a relaying transmission from the gateway to the core network CN and notably to the core network functions including the User Plane Function UPF,
- a reverse communication path from the core network NW and the core network functions to the gateway GW and back to the satellite SAT via the feeder link FL1, and
- a downlink signal (e.g., data packets) from the satellite SAT to the second user equipment UE2 via the network communication interface Ni.

Such communication path notably includes a communication loop at the core network side since the communication path involves a back-and-forth path between the Earth surface and the satellite SAT. Such communication path indeed involves two transmissions via the feeder link FL1.

In particular, even if the base station BS or part of the base station BS is embarked onboard the satellite SAT, as represented on figures 2 and 3, the communication path to establish a communication between the first user equipment UE1 and the second user equipment UE2 via the satellite communication network NW still involves a communication loop at the core network side and two transmissions via the feeder link FL1.

The communication loop at the core network side still occurs in the case of a first user equipment UE1 covered by a satellite beam footprint projected by a satellite SAT1 and intending to transmit a communication signal to a second user equipment UE2 covered by another satellite beam footprint projected by another satellite SAT2, the satellites SAT1, SAT2 being interconnected via an inter-satellite link ISL. Indeed, as represented on figure 4, two transmissions via the feeder link FL2 occur. In another embodiment (not represented on figure 4), the satellite SAT1 may have its own feeder link FL1 with the gateway GW or another gateway, yet, even in such embodiment, two transmissions between the satellites SAT1, SAT2 and the Earth surface still occur (i.e., one transmission via feeder link FL1 and one transmission via feeder link FL2).

Such communication loop and double transmissions via the feeder link FL1 notably lead to transmission delays, feeder link overload and/or even feeder link failure. In particular, such backwards still occur when the user equipment UE1, UE2 are covered by the same satellite or by satellites linked by an inter-satellite Link ISL, as represented in the architectures of figures 1 to 4.

In order to avoid such communication loop in the communication path between two user equipment UE1, UE2 under the same satellite coverage or under coverage of satellites linked by an inter-satellite link ISL, a local User Plane Function UPF and a full base station BS could be embarked onboard the satellite SAT. Yet, a satellite SAT embarking a full User Plane Function UPF and base station BS represent considerable additional costs (notably computational) to be launched on orbit.

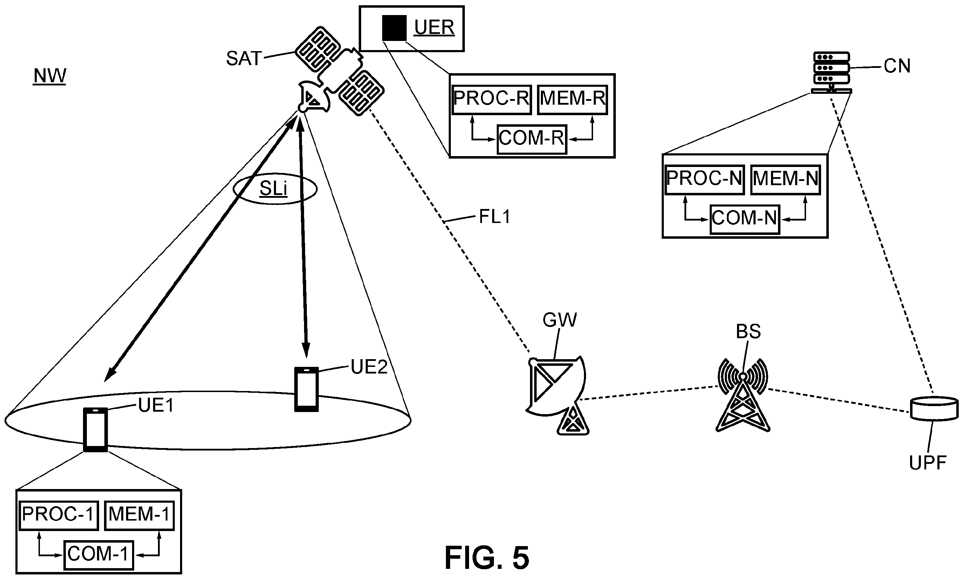

In order to address such shortcomings, the present disclosure proposes a satellite communication network system as represented on figure 5. The present disclosure also proposes method steps, as represented on figures 6, 7, 8 and/or 9, for enabling the transmission of at least one signal between a first user equipment UE1 and a second user equipment UE2. In particular, the proposed system and method consider the transmission of at least one signal between a first user equipment UE1 and a second user equipment UE2 sharing similar coverage properties. By sharing similar coverage properties, it may be understood that:
- the first user equipment UE1 and the second user equipment UE2 are covered by one or several satellite beam footprints projected by a same satellite SAT, as represented on figures 1 to 3 and on figure 5, or
- the first user equipment UE1 and the second user equipment UE2 are covered by one or several satellite beam footprints projected by several satellites SAT1, SAT2 and such satellites SAT1, SAT2 are linked by an inter-satellite link ISL, as represented on figure 4.

Referring to figure 5, a part of a non-terrestrial communication network NW as proposed in the present disclosure is represented. Similarly to the part of the satellite communication network NW as represented on figures 1 to 4, the proposed satellite communication network NW as represented on figure 5 may include a radio access network (or RAN) and a core network side. More particularly, the satellite communication network NW may comprise an access device providing connectivity to end-users (e.g., user equipment UE1, UE2). Such access device may for example be a satellite SAT projecting one or several satellite beam footprints, such satellite beam footprints covering the location of user equipment UE1, UE2. The non-terrestrial communication network NW may also comprise a gateway GW, at least one base station BS managing the radio resources of the cell(s) formed by the satellite beam footprints, a core network CN and one more core network functions such as the User Plane Function UPF. In another embodiment, the connectivity of end-users may be provided by another network entity than the satellite SAT, notably by another access device, for example a HAPS. In another embodiment, the part of the non-terrestrial communication network NW may comprise several satellites SAT1, SAT2, some satellites SAT1, SAT2 being interconnected by an inter-satellite link ISL as represented on figure 4.

At least a first user equipment UE1 and a second user equipment UE2 may be connected to the satellite communication network NW. The first user equipment UE1 and the second user equipment UE2 are considered to share similar coverage properties. In particular, in the context of the present disclosure, the first user equipment UE1 and the second user equipment UE2 have an established network communication mode with the radio access network provided by the satellite communication network NW, at least at an initial stage (or initial step) of the disclosure. In other words, the first user equipment UE1 and the second user equipment UE2 transmit uplink signals and downlink signals via the base station BS allocating radio resources to the user equipment UE1, UE2 in the reception and transmission of control information and/or data traffic. Such network communication (or network communication mode), also referred to as network-to-device communication, is for example represented on figures 1 to 4. Such network communication mode between the user equipment UE1, UE2 and the access device (e.g., the satellite SAT) of the satellite communication network NW relies on a network communication interface Ni, as represented on figures 1 to 4. Such network communication interface Ni may be a Uu radio interface.

In the network communication mode, the first user equipment UE1 and the second user equipment UE2 may receive network information from different network entities (e.g., core network entities, the base station(s) serving the cell(s) covering the user equipment UE1, UE2, the satellite SAT...). Such network information may for example include broadcasted system information (or SI), synchronization information, satellite ephemerides information, Uu reference signals, epoch times, radio resource configuration information, cell-related information. Such network information may be specifically received by the user equipment UE1, UE2, for example as a unicasted signal emitted from the base station BS to the user equipment UE1, UE2 via dedicated downlink signaling. Such network information may also be common information sent to several devices including the user equipment UE1, UE2, for example as groupcasted or broadcasted signals, via broadcast or groupcast channels. For instance, intra-cell network information may be received by all devices covered by the same cell. The user equipment UE1, UE2 may also receive network command and adjustment information from network entities. In particular, the user equipment UE1, UE2 may receive Timing Advance Command (or TAC) signals via the Medium Access Control (or MAC) layer, also referred to as MAC-CE TAC (or MAC Control Element Timing Advance Command).

In an embodiment, the present disclosure proposes a switching method for switching from such a network communication mode, as represented on figures 1 to 4, to a sidelink communication mode, as represented on figure 5. In an embodiment, the present disclosure proposes a relaying method for performing a transmission relaying between distinct user equipment in the sidelink communication mode, without requiring several back and forth transmissions between the access device and the Earth surface. In an embodiment, the present disclosure proposes a communication method for user equipment UE1, UE2 to exchange signals via a sidelink communication mode.

By the sidelink communication mode, it may be understood that the user equipment UE1, UE2 may communicate with each other without transmitting signals via the base station BS. In particular, in the proposed sidelink communication mode, the communication path between the first user equipment UE1 and the second user equipment UE2 for transmitting a signal from the first user equipment UE1 and the second user equipment UE2 does neither require a loop at the User Plane Function UPF break-out point, nor several transmissions between the satellite SAT and the Earth surface via the feeder link FL1.

In order to set up such sidelink communication mode in the context of the non-terrestrial communication network NW, figure 5 details a schematic architecture of a user equipment UE1, UE2, of a core network entity CN and of a relaying user equipment UER in such non-terrestrial communication network NW.

The core network entity CN may be configured to transmit network information about the non-terrestrial network NW to other network entities and/or to user equipment UE1, UE2. The core network entity CN may also be configured to perform a switching method for switching the communication mode of user equipment UE1, UE2 from a network communication mode to a sidelink communication mode. Such switching method will be further detailed in figure 8. To that end, the core network entity CN may comprise at least a core network computing circuit comprising a processing unit PROC-N, a memory unit MEM-N and a communication unit COM-N.

The user equipment UE1, UE2 may be configured to perform a communication method in order to communicate with other user equipment. The schematic architecture of the first user equipment UE1 is detailed on figure 5, yet such architecture may apply to other user equipment, for example the second user equipment UE2. Such switching method will be further detailed in figure 8. In order to perform the communication method, the user equipment UE1, UE2 may comprise at least a user equipment computing circuit comprising a processing unit PROC-1, a memory unit MEM-1 and a communication unit COM-1.

The relaying user equipment UER may be understood as a relaying device for relaying a signal transmitted between the first user equipment UE1 and the second user equipment UE2 in the sidelink communication mode. Such relaying user equipment UER may notably be embarked on a network entity corresponding to the access device of the non-terrestrial communication network NW. The relaying user equipment UER may notably be embarked on a satellite projecting satellite beam footprints covering the first user equipment UE1 and the second user equipment UE2, as represented on figure 5. A common relaying user equipment UER may relay signals between a plurality of user equipment UE1, UE2 sharing similar coverage properties. For example, user equipment UE1, UE2 being covered by a same satellite beam footprint may share a same relaying user equipment UER. The relaying user equipment UER may be configured for performing a relaying method for relaying a signal between at least the first user equipment UE1 and the second user equipment UE2. Such relaying method will be further detailed in figure 6. To that end, the relaying user equipment may comprise at least a relaying computing circuit comprising a processing unit PROC-R, a memory unit MEM-R and a communication unit COM-R.

It is now referred to figure 6. Figure 6 is a flowchart representing steps of a relaying method performed by a relaying user equipment UER for relaying a signal at least between a first user equipment UE1 and a second user equipment UE2.

In the context of the present disclosure, when the relaying method is performed, the first user equipment UE1 and the second user equipment UE2 initially communicate via the network communication mode.

At a step 610, the relaying user equipment UER onboard a satellite SAT (or more generally, onboard an access device of the non-terrestrial communication network NW) receives relaying assistance information. Such relaying assistance information may be received by the relaying user equipment UER via the feeder link FL1. Such relaying assistance information may be transmitted to the relaying user equipment UER by one or several network entities. For example, the relaying assistance information may be transmitted by the core network entity CN and forwarded to the relaying user equipment UER. The relaying assistance information may also be transmitted to the relaying user equipment UER by another network entity, such as the base station BS, or by another access device or another satellite SAT, for example via an inter-satellite link ISL.

The relaying assistance information may be provided to the relaying user equipment UER for enabling the establishment of a sidelink communication link between such relaying user equipment UER and eligible user equipment UE1, UE2. By eligible user equipment UE1, UE2, it may be understood user equipment UE1, UE2 connected to the non-terrestrial communication network NW which coverage enables the communication in sidelink communication mode with the relaying user equipment UER. In particular, by receiving the relaying assistance information at step 610, the relaying user equipment UER performs a network-aided discovery phase. In other words, via the received relaying assistance information, the relaying user equipment UER is able to identify eligible user equipment UE1, UE2 with which a sidelink communication link may be established.

The relaying assistance information received by the relaying user equipment UER may include relaying control assistance information, more simply referred to as control assistance information.

The control assistance information may indicate a switch between the network communication mode and the sidelink communication mode. Such control assistance information may for example include a binary value indicating that a switch to another communication mode (base station or sidelink) is possible to the user equipment UE1, UE2. Such control assistance information may also include data related to conditions for switching to the sidelink and/or the network communication mode, such as a timer, timing conditions, signal quality conditions (e.g., required levels of Reference Signal Received Power or RSRP on the user equipment side).

The relaying assistance information received by the relaying user equipment UER may also include relaying access assistance information, more simply referred to as access assistance information. The access assistance information may correspond to data enabling the user equipment UE1, UE2 to access to the sidelink communication mode. In particular, such access assistance information may include high level access assistance information and low level access assistance information.

The high level access assistance information may include data identifying user equipment eligible to communicate with the relaying user equipment UER in the sidelink communication mode by establishing a sidelink communication link with each eligible user equipment UE1, UE2. The eligible user equipment UE1, UE2 for a given relaying user equipment UER may refer to user equipment covered by a satellite beam footprint projected by the satellite SAT embarking the relaying user equipment UER. Such eligible user equipment UE1, UE2 may be listed in the high level access assistance information as having access rights to communicate in the sidelink communication mode via the relaying user equipment UER. Such high level access assistance information may thus correspond to user equipment access rights to the sidelink communication mode, sidelink identifiers, encryption keys, required level of Quality of Service (or QoS) parameters. The high level access assistance information may thus include a list of user equipment identifiers, a list of services, a list of priority and/or a required level of Quality of Service (or QoS) parameters for accessing the sidelink communication mode.

The low level access assistance information may correspond to information related to the sidelink communication radio interface, such as information for a PC5 setup configuration. In other words, the low level access assistance information may correspond to interface setup configuration information for establishing a sidelink communication interface, such as a PC5 radio interface. The low level access assistance information may thus comprise PC5 setup configuration information. The low level access assistance information may also provide information for eligible user equipment UE1, UE2 to access the sidelink communication interface. To that end, the low level access assistance information may also include data related to resource allocation for switching and/or communicating in the sidelink communication mode. For example the access assistance information may include information about a resource pool to be used for transmitting signals in the sidelink communication mode. The access assistance information may include information related to one or several resource allocation modes for eligible user equipment UE1, UE2 to be allocated radio resources for signal transmissions in the sidelink communication mode. For example, the access assistance information may include information about resource allocation procedures (e.g., scheduled resource allocation by the base station BS, or resource sensing mechanisms for autonomous resource allocation). The low level access assistance information may also include data related to a timing advance to be applied by the eligible user equipment UE1, UE2 for sending signals in the sidelink communication mode.

At a step 620, a relaying service of the access device SAT of the non-terrestrial communication network NW begins. In other words, the access device, for example the satellite SAT, does not act as a bent-pipe structure relaying signals to the Earth surface via the feeder link FL1 anymore. Based on the received relaying assistance information, the relaying user equipment UER may establish a sidelink communication interface, such as a PC5 radio interface, on the relaying user equipment UER side, thus, on the access device SAT side.

In particular, at step 620, the relaying user equipment UER may be allocated resources for transmitting signals related to the sidelink communication mode, for example sidelink establishment requests or a sidelink setup request, to user equipment UE1, UE2 as described in the next step 630. Moreover, during such step 620, the relaying user equipment UER may broadcast information related to the relaying user equipment UER to the user equipment UE1, UE2, such as an identifier of the relaying user equipment UER or the relaying service proposed by the relaying user equipment UER.

At a step 630, a first sidelink communication link is established between the relaying user equipment UER and the first user equipment UE1. In an embodiment, such first sidelink communication link may be initiated by the relaying user equipment UER, for example by initiating the sidelink communication radio interface (i.e., the PC5 radio interface) with the first user equipment UE1. Such first sidelink communication link may be initiated by the relaying user equipment UER based on the received relaying assistance information. In particular, such first sidelink communication link may be initiated by the relaying user equipment UER based on the data related to an identification of the first user equipment UE1 included in the access assistance information. The relaying user equipment UER may initiate the first sidelink communication link by transmitting a sidelink establishment request to the first user equipment UE1. In another embodiment which will be further detailed, the first sidelink communication link may be initiated by the first user equipment UE1. For example, as will be further detailed, the relaying user equipment UER may receive a sidelink communication link request from the first user equipment UE1. The first sidelink communication link may then be established at step 630 if the relaying user equipment UER determines that the first user equipment UE1 is an eligible user equipment, based on the received access assistance information.

At a step 640, a second sidelink communication link is established between the relaying user equipment UER and the second user equipment UE2. Similarly to the first sidelink communication link and in an embodiment, such second sidelink communication link may be initiated by the relaying user equipment UER, for example by sending an establishment request signal to the second user equipment UE2 indicating that a second sidelink communication link may be established, via the sidelink communication radio interface (i.e., the PC5 radio interface). Such second sidelink communication link may be initiated by the relaying user equipment UER based on the received relaying assistance information. In particular, such second sidelink communication link may be initiated by the relaying user equipment UER based on the data related to an identification of the second user equipment UE2 included in the access assistance information,. In another embodiment, the second sidelink communication link may be initiated by the second user equipment UE2. For example, the relaying user equipment UER may receive a sidelink communication link request from the second user equipment UE2. The second sidelink communication link may then be established at step 640 if the relaying user equipment UER determines that the second user equipment UE2 is an eligible user equipment, based on the received access assistance information.

In the context of the present disclosure, sidelink communication links are established with the first user equipment UE1 and the second user equipment UE2 at respective steps 630 and 640 for the relaying user equipment UER to relay signals between the first user equipment UE1 and the second user equipment UE2. Such steps may broaden to the cases of a plurality of eligible user equipment which transmissions may be relayed by the relaying user equipment UER. There may be as many sidelink communication links established with the relaying user equipment UER as there are user equipment accessing the sidelink communication mode via such relaying user equipment UER.

At an optional step 650, the relaying user equipment UER may transmit part of the received relaying assistance information, also referred to as relayed assistance information, to user equipment UE1, UE2. Such relayed assistance information may for example be part of the access assistance information received by the relaying user equipment UER at step 610. In particular, such relayed assistance information may for example include data related to the timing advance to be applied by the user equipment UE1, UE2 for transmitting a signal via the sidelink communication mode. Such relayed assistance information may also be low-level PC5 setup configuration information for assisting the user equipment UE1, UE2 in establishing their sidelink communication interface. The relayed assistance information may also include data related to a resource allocation procedure to be applied by the user equipment UE1, UE2 for being allocated radio resources for performing transmissions in the sidelink communication mode. The relayed assistance information may include information to user equipment UE1, UE2 for accessing the sidelink radio interface. The relayed assistance information may be transmitted to the user equipment UE1, UE2 via the sidelink communication links established at steps 630, 640. For example, the relayed assistance information may be transmitted by the relaying user equipment UER to the user equipment UE1, UE2 along with the sidelink establishment or setup request transmitted by the relaying user equipment UER at steps 630 and 640 for initiating the first and second sidelink communication links.

At a step 660, the relaying user equipment UER is able to relay a signal at least from the first user equipment UE1 to the second user equipment UE2 in sidelink communication mode. In other words, the relaying user equipment UER and each of the first user equipment UE1 and the second user equipment UE2 may communicate via the sidelink communication radio interface (notably, the established PC5 radio interface). The relaying user equipment UER may for example receive a signal from the first user equipment UE1 and relay such signal to the second user equipment UE2 using sidelink communication mode. To that end, radio resources allocated to sidelink transmissions may be used by the relaying user equipment UER. More generally, the relaying user equipment UER may be able to relay signals between a plurality of eligible user equipment UE1, UE2.

At an optional step 670, the relaying user equipment UER may provide eligible user equipment UE1, UE2 with additional assistance information. In particular, such additional assistance information may include part of the network information. Such additional assistance information may for example include information related to reference signals e.g. transmitted by a base station via the Uu radio interface -, information related to satellite ephemerides, and/or system information related to the non-terrestrial communication network NW. Such additional assistance information may also include information about the relaying service termination, for example to indicate when and/or how to switch from the sidelink communication mode back to the network communication mode. Such additional assistance information may also include information for user equipment UE1, UE2 to recover a link to the non-terrestrial communication network NW in the case of a radio link failure. Such additional assistance information may be provided by a network entity to the relaying user equipment UER for transmission to user equipment UE1, UE2. For example, the relaying user equipment UER may obtain such additional assistance information during step 610, within the received assistance information. Such additional assistance information may also be provided and/or updated to the relaying user equipment UER by other satellites SAT (for example, via inter-satellite links ISL), or via feeder link FL1, even when the sidelink communication mode is established and functional.

It is now referred to figure 7. Figure 7 is a flowchart showing steps for performing a communication method by a user equipment UE1, UE2. Such communication method may for example be performed by the first user equipment UE1 or the second user equipment UE2. More generally, the communication method may be performed by any eligible user equipment UE1, UE2 having access rights to communicate via the sidelink communication mode using the relaying user equipment UER.

At a step 700, also referred to as an initial step or initial stage, the user equipment UE1, UE2 is connected to the non-terrestrial network NW via a cell managed by a base station BS. The user equipment UE1, UE2 communicates via the network communication mode. In other words, the user equipment UE1, UE2 is able to transmit signals to other devices such as a second user equipment UE2, UE1 via a network communication interface Ni. The user equipment UE1, UE2 is also able to receive signals from other devices and/or from network entities via the network communication interface Ni.

At a step 710, the user equipment UE1, UE2 may receive user assistance information. In particular, such user assistance information may include information for the user equipment UE1, UE2 to switch from the network communication mode to a sidelink communication mode.

Such user assistance information may be received from network entities, such as the base station BS or a core network entity CN. More generally, such user assistance information may be received from one or several entities of the non-terrestrial communication network NW. Such user assistance information may be received via the network communication interface Ni of the user equipment UE1, UE2. For example, such user assistance information may be received through Non Access Stratum (NAS) signaling. Alternatively, such user assistance information may be received as Radio Resource Control (RRC) signaling. In such case, the user assistance information may for example be transmitted from the core network entity CN to the base station BS with access network level signaling and the base station BS may forward such user assistance information to the access device (e.g., the satellite SAT) as part of the feeder link FL1 control channel.

Such user assistance information may include cell-specific assistance information such as System Information Block (or SIB) signals and/or user equipment-specific assistance information, such as Radio Resource Control (or RRC) configuration information or dynamic control information.

In particular, the user assistance information received by the user equipment UE1, UE2 enables the user equipment UE1, UE2 to perform a switch from the network communication mode to the sidelink communication mode.

To that end, the user assistance information may include identification data related to the relaying user equipment UER. Such identification data included in the user assistance information thus enables a network-aided discovery phase for the user equipment UE1, UE2, so that the user equipment UE1, UE2 is able to identify the relaying user equipment UER as a relaying device for establishing a sidelink communication link.

The user assistance information may also include data related to conditions for accessing such relaying user equipment UER and establishing a sidelink communication link with such relaying user equipment UER. Such conditions may for example be timing conditions, radio capability conditions and/or geographic conditions. For example, data related to conditions for accessing such relaying user equipment UER may depend on preconfigured time windows, timer, on a perceived power level by the user equipment UE1, UE2 such as the Reference Signal Received Power (or RSRP) or on a location of the user equipment. Such conditions for accessing the relaying user equipment UER may thus be user equipment-specific and/or relaying user equipment-specific.

The user assistance information may also include information for physical resource configuration for user equipment UE1, UE2 to communicate in the sidelink communication mode. Such information for physical resource configuration may notably enable the user equipment UE1, UE2 to be allocated radio resources for transmitting signals to the relaying user equipment UER. Such information for physical resource configuration may also include information about a type of sidelink resource allocation. For example, such information about a type of sidelink resource allocation may describe a resource sensing mechanism, a resource allocation procedure, an autonomous or a network-assisted resource selection procedure to be performed by the user equipment UE1, UE2. Examples of resource selection procedures are for example detailed in New Radio C-V2X Radio Resource Allocation Modes 1 and 2. Such information for physical resource configuration may for example include data related to a resource pool, a subset of frames, a subset of slots, a subset of symbols allocated to the sidelink communication mode at a cell level. The information for physical resource configuration may also correspond to a specific frame configuration via a mapping between configured resource frame or slot structures used for the network communication interface Ni and configured resource frame or slot structures used for the sidelink communication interface SLi.

Such user assistance information may also include information related to a timing advance to be computed by the user equipment UE1, UE2 for accessing and/or maintaining communication via a sidelink communication link with the relaying user equipment UER. For example, such information related to a timing advance may be a timing advance shift value to be applied by the user equipment UE1, UE2 to a current value of timing advance applied by the user equipment UE1, UE2 in the initial network communication mode at step 700 (for example, a timing advance shift value to be applied to the current timing advance value applied when performing an uplink transmission via the Uu radio interface). In such case, the information related to a timing advance may be a common information diffused to all user equipment UE1, UE2 in a cell for example. The information related to a timing advance may also be a timing advance shift value to be applied to the perceived timing of frames received from the relaying user equipment UER by each user equipment UE1, UE2. Such information related to a timing advance may also be a value specific to each user equipment UE1, UE2, based on the knowledge of the core network CN about the propagation delay between each user equipment UE1, UE2 and the access device SAT in the network communication mode for example.

At a step 720, a sidelink communication link is established between each user equipment UE1, UE2 and the relaying user equipment UER. In the context of the present disclosure, at least a first sidelink communication link may be established between the relaying user equipment UER and the first user equipment UE1 and a second sidelink communication link may be established between the relaying user equipment UER and the second user equipment UE2. In particular, such sidelink communication links may be initiated either by the relaying user equipment UER, or by the first and/or the second user equipment UE1, UE2.

Indeed, in an embodiment as detailed at step 630 and 640 of figure 6, such sidelink communication link may be initiated by the relaying user equipment UER. In such embodiment, at step 720, the user equipment UE1, UE2 may receive a sidelink establishment request or a sidelink setup request from the communication network NW, for example from the relaying user equipment UER. Such received request may include an indication that the relaying user equipment UER is able to relay transmissions of the first and second user equipment UE1, UE2 in the sidelink communication mode. In such embodiment, the first and second user equipment UE1, UE2 may have received at least an identifier of the relaying user equipment UER, for example a PC5 identifier of the relaying user equipment UER, as part of user assistance information during step 710. Thus, based on such received user assistance information and on the received sidelink establishment request, the first and second user equipment UE1, UE2 may identify the relaying user equipment UER and respectively access the first and second sidelink communication links as initiated by the relaying user equipment UER, thus resulting in established first and second sidelink communication links.

In another embodiment, such sidelink communication link may be initiated by the first or the second user equipment UE1, UE2, for example by the first user equipment UE1 as the user equipment transmitting a signal. In such embodiment, the first user equipment UE1 may initiate the first sidelink communication link by transmitting a first access signal to be received by the relaying user equipment UER, via the first sidelink communication interface SLi at step 720. Such first access signal received by the relaying user equipment UER may be a sidelink request signal of the first user equipment UE1 requesting a relay of the relaying user equipment UER to the second user equipment UE2 in the sidelink communication mode. In such embodiment, the first user equipment UE1 may have received at least an identifier of the relaying user equipment UER, for example a PC5 identifier of the relaying user equipment UER, as well as information for initiating the first sidelink communication link, as part of user assistance information during step 710. For example, such received information may correspond to part of the low-level access assistance information as detailed in step 610 of figure 6. Thus, based on such received user assistance information, the first user equipment UE1 may identify the relaying user equipment UER and transmit a first access signal to the relaying user equipment UER to initiate the first sidelink communication link, thus resulting in an established first sidelink communication link. In such embodiment, the second user equipment UE2 may then receive a first access signal for accessing the second sidelink communication link from the relaying user equipment UER, following the initiated sidelink request of the first user equipment UE1.

At an optional step 730, the user equipment UE1, UE2 may receive relayed assistance information. Such relayed assistance information may be received by the user equipment UE1, UE2 from the relaying user equipment UER. In particular, such relayed assistance information may be received via the sidelink communication link as established between at step 720. Such optional step 730 may thus occur after step 720 or concurrently to step 720, for example, when relayed assistance information is transmitted to the user equipment UE1, UE2 along with the sidelink establishment request transmitted by the relaying user equipment UER for initiating the sidelink communication link during step 720.

Such relayed assistance information may provide assistance information to the user equipment UE1, UE2 for accessing the sidelink communication mode, for establishing the sidelink communication interface SLi and/or more generally for performing transmissions via the sidelink communication link. For example, the relayed assistance information may include low-level sidelink setup configuration information, data related to a timing advance to be applied when transmitting the signal via the sidelink communication link, information for physical resource configuration.

In such embodiment, the relayed assistance information may be a complementary source of assistance information to the user equipment UE1, UE2 with respect to the user assistance information as received at step 720. Indeed, part of the aforementioned user assistance information may be received from the relaying user equipment UER via relayed assistance information. Advantageously, such relayed assistance information combined with user assistance information enables the user equipment UE1, UE2 to be provided with exhaustive assistance information for switching from the network communication mode to the sidelink communication mode. In particular, by being provided part of the user assistance information via the relayed assistance information, less signaling and/or computational resources, and thus less bandwidth requirement of the feeder link FL1 is required in the network communication mode at step 710 for transmitting user assistance information. In another embodiment as aforementioned, the whole assistance information provided to the user equipment UE1, UE2 may be solely contained in the user assistance information, for example transmitted by the non-terrestrial communication network NW.

At a step 740, the user equipment UE1, UE2 may transmit and/or receive communication signals in the sidelink communication mode. Based on the received user assistance information and/or the received relayed assistance information, the user equipment UE1, UE2 is able to rely on allocated radio resources and/or to select radio resources allocated to the sidelink communication mode for transmitting communication signals using the relaying user equipment UER as a relay. Moreover, the user equipment UE1, UE2 may use the data related to the timing advance in sidelink communication mode for applying a timing advance to the communication signals transmitted at step 740.

In an optional embodiment, the user equipment UE1, UE2 may also exchange, at this stage, data related to an establishment of sidelink communication link(s) between the relaying user equipment UER and other user equipment. For example, such exchanged data may be a message emitted by the user equipment UE1, UE1 to the relaying user equipment UER requesting a sidelink communication mode with such other user equipment. Such exchanged data may also be an information provided by the relaying user equipment UER to the user equipment UE1, UE2 to inform that specific user equipment are eligible user equipment for the sidelink communication mode and/or that other sidelink communication link(s) are established and effective for transmitting a signal to such eligible user equipment via the sidelink communication mode. Such embodiment thus enables the user equipment UE1, UE2 to further target specific eligible user equipment for transmitting signals in the sidelink communication mode.

Once the sidelink communication link is established between the user equipment UE1, UE2 and the relaying user equipment UER, a communication step can occur at step 740. Signals can be emitted and received by the user equipment UE1, UE2 with the network access device SAT acting as a relaying device via the embarked relaying user equipment UER. In

Advantageously, once the sidelink communication mode is established at step 740, the user equipment UE1, UE2 can transmit signals using the sidelink communication mode, even in the absence of feeder link FL1 and without using the network communication interface Ni. In an embodiment, the feeder link FL1 and the network communication interface Ni may be maintained during the sidelink communication mode. For example, the first user equipment UE1 may communicate with the second user equipment UE2 using sidelink communication mode via the sidelink communication interface SLi and may communicate in parallel with another user equipment using network communication mode via the network communication interface Ni, notably when such another user equipment is not an eligible user equipment UE1, UE2 to communicate in the sidelink communication mode for example.

Once the sidelink communication mode is established at step 740, the user equipment UE1, UE2 may have a direct communication behavior using the received user assistance information and potentially the relayed assistance information.

For example, in the sidelink communication mode, the user equipment UE1, UE2 compute timing advance values for sending signals via the sidelink communication link based on the received user assistance information and/or on the relayed assistance information (and not on the MAC-CE TAC signals anymore).

Another example of direct communication behavior is that user equipment UE1, UE2 may select resources based on a sidelink resource selection procedure according to the received information for physical resource configuration. In an embodiment, once the sidelink communication mode is established at step 740, the user equipment UE1, UE2 may be provided with a limited set of resources specific to sidelink communication mode via a configured grant. The user equipment UE1, UE2 may then transmit resource release requests to the relaying user equipment UER or control signals indicating the amount of required radio resources to be allocated on the sidelink communication link for transmitting the signal. In an embodiment, each eligible user equipment UE1, UE2 may, after establishing the sidelink communication link with the relaying user equipment UER, select resources within a resource pool based on the respective identity of such user equipment UE1, UE2 and/or on the combined identities of the transmitting and receiving user equipment UE1, UE2 when a signal is transmitted. Such resource selection by user equipment UE1, UE2 may notably occur after the exclusion of resources reserved for the relaying user equipment UER.

Another example of direct communication behavior is that user equipment UE1, UE2 may include a sidelink control information (or SCI) in their transmissions in the sidelink communication mode. In particular, such sidelink control information takes the relaying user equipment UER into account for transmissions. For example, when the first user equipment UE1 transmits a signal to the second user equipment UE2 in the sidelink communication mode, the first user equipment UE1 may set the relaying user equipment UER as the target (or destination) user equipment of the signal and includes an identifier of the second user equipment UE2 in the sidelink control information. In another embodiment, when the first user equipment UE1 transmits a signal to the second user equipment UE2 in the sidelink communication mode, the first user equipment UE1 may set the second user equipment UE2 as the target (or destination) user equipment of the signal and the relaying user equipment UER may be configured with a set of identifiers of all eligible user equipment UE1, UE2 to communicate in the sidelink communication mode.

At an optional step 750, the user equipment UE1, UE2 may receive additional assistance information. Such additional assistance information may be received by the user equipment UE1, UE2 before, while or after the establishment of the sidelink communication mode at step 740. For example, such additional assistance information may be updated to the user equipment UE1, UE2 after establishing the sidelink communication mode at step 740. Alternatively, such additional assistance information may also be provided to the user equipment UE1, UE2 concurrently with the received user assistance information at step 710 or with the relayed assistance information at optional step 730 for example.

In an embodiment, such additional assistance information may be transmitted to the user equipment UE1, UE2 by a network entity such as the core network CN or the base station BS, for example through Non Access Stratum signaling, in parallel to the sidelink signals transmitted via the relaying user equipment UER. In another embodiment, such additional assistance information may be transmitted to the user equipment UE1, UE2 by the relaying user equipment UER via the sidelink communication link established at step 720.

Such additional assistance information may enable the user equipment UE1, UE2 to get updated network information about part of the non-terrestrial communication network NW, synchronization information about the cells covering such user equipment UE1, UE2, information for radio link failure recovery etc.

To that end, the additional assistance information may notably include network information such as system information and satellite ephemerides. In particular, when such additional assistance information is provided to the user equipment UE1, UE2 by the relaying user equipment UER via the sidelink communication link, the proposed step 750 advantageously enables the user equipment UE1, UE2 to get network information even in the absence of the network communication mode, so that the user equipment UE1, UE2 may still update its synchronization data and knowledge of the non-terrestrial communication network NW while communicating in the sidelink communication mode. Advantageously, such step 750 enables the user equipment UE1, UE2 to update its synchronization data and knowledge of the non-terrestrial communication network NW even in the absence of feeder link FL1, in the case of radio link failure (RLF), or when the user equipment UE1, UE2 is out of coverage of some cells of the non-terrestrial communication network NW and cannot receive corresponding system information blocks (SIB) from the core network entity CN.

At a step 760, the user equipment UE1, UE2 may switch back to the network communication mode. Such back switch to the network communication mode may be based on conditions of releasing or ending of the sidelink communication mode. Such conditions may be timing conditions, for example a service termination or a timer expiration of the relaying service performed by the relaying user equipment UER. Such conditions may also be the recovery of a radio link failure.

The information for switching back to the network communication mode may be provided to the user equipment UE1, UE2 concomitantly to the user assistance information, the relayed assistance information and/or to the additional assistance information at respective steps 710, 730 and 750. The user equipment UE1, UE2 may for example receive data related to a termination of the sidelink communication mode included in the conditions for accessing the relaying user equipment UER within the user assistance information. Data related to a termination of the sidelink communication mode may also be provided to the user equipment UE1, UE2 by the relaying user equipment UER within the relayed assistance information or via another signal during the sidelink communication mode. In the case of a radio link failure, user equipment UE1, UE2 may also receive data related to link recovery for switching back to the network communication.

It is now referred to figure 8. Figure 8 is a flowchart showing steps of a method performed by a non-terrestrial communication network NW for relaying a signal between the first user equipment UE1 and the second user equipment UE2. In particular, such non-terrestrial communication network NW may correspond to the satellite communication network NW represented on figure 5.

At a step 800, also referred to as an initial step, the non-terrestrial communication network NW serves user equipment UE1, UE2 in a network communication mode. In other words, the transmissions of the user equipment UE1, UE2 connected to the non-terrestrial communication network NW are performed based on a satellite bent-pipe structure, with user equipment UE1, UE2 communicating via the base station BS and/or any other network entity of the core network CN. The network entity may execute radio protocols from the radio access network and route data packets to the user equipment UE1, UE2 via core network functions (e.g., the User Plane Function UPF), the base station BS, and/or the satellite SAT via the feeder link FL1. At step 800, the non-terrestrial communication network NW may transmit network information to the user equipment UE1, UE2 via System Information Blocks (SIB) for example. Such network information may for example include configuration data, satellite ephemerides, data related to resource allocation, data related to a timing advance to be applied for transmitting signals to the base station BS in the network communication mode, information related to handover procedures and/or information related to cell coverage for example. Such network information may be broadcasted or groupcasted to a plurality of user equipment UE1, UE2 covered by the same cell for example. Network information may also be unicasted to specific user equipment UE1, UE2. The network information transmitted to the user equipment UE1, UE2 at step 800 may be transmitted at specific times and/or according to specific periodicities depending on the network entity transmitting such network information.

At step 800, the non-terrestrial communication network NW functions in a network communication mode. The non-terrestrial communication network NW notably has knowledge that the network access device SAT serving user equipment UE1, UE2 at the initial step 800 functions in a network communication mode. For example, the non-terrestrial communication network NW may have knowledge that the network access device SAT uses a bent-pipe module and a network communication interface Ni such as the Uu radio interface, to relay transmissions of the user equipment UE1, UE2 at a physical layer to a ground-based base station BS, via a feeder link FL1.

During step 800, the non-terrestrial communication network NW may determine that some user equipment UE1, UE2 share a similar coverage and are eligible for communicating in the sidelink communication mode via a common relaying user equipment UER. Referring to figure 5, the non-terrestrial communication network NW may identify that the first user equipment UE1 and the second user equipment UE2 are covered by the same satellite beam footprint and may communicate in the sidelink communication mode via a same relaying user equipment UER embarked onboard satellite SAT. In an embodiment, the non-terrestrial communication network NW may store a correspondence between each satellite beam footprint (e.g., each satellite cell) and an associated relaying user equipment UER. Such storage may for example be at the core network CN level. Such associated relaying user equipment UER may for example be the relaying user equipment UER embarked onboard the satellite SAT projecting such satellite beam footprint. In another embodiment, several satellite beam footprints projected by several satellites SAT1, SAT2 may be associated to a same relaying user equipment UER embarked on either one of such several satellites SAT1, SAT2, for example when such several satellites SAT1, SAT2 are linked by an inter-satellite link ISL. In such embodiment, the inter-satellite link ISL may be configured to act as a bent pipe satellite link for transmitting signals between a relaying user equipment UER embarked on satellite SAT1 and a user equipment covered by the other satellite SAT2. In a particular embodiment, satellites SAT1, SAT2 linked by an inter-satellite link ISL may include respective relaying user equipment UER, which appear as a unique relaying interface to the core network CN and more generally to the non-terrestrial communication network NW. The inter-satellite link ISL between satellites SAT1, SAT2 may thus enable to extend to relaying coverage for user equipment covered by different satellites SAT1, SAT2.

In order to determine that some user equipment UE1, UE2 share a similar coverage, the non-terrestrial communication network NW may use information stored at the core network CN of the non-terrestrial communication network NW. Indeed, the core network may have knowledge about each base station BS associated to the cells serving each end-user. In particular, in classic implementations of the non-terrestrial communication network NW, each base station BS may provide the core network CN with information related to the satellite access of such base station BS. Alternatively, the core network NW may be configured by an Operation and Maintenance function (or OAM) with a dynamic or static mapping between base station identifiers and a type of access (for example, a terrestrial access or a satellite access) provided by each base station BS. Alternatively, the core network CN may also associate a base station BS with an access device SAT for specific services. More generally, the core network CN has knowledge about a correspondence between the coverage of user equipment UE1, UE2 and an associated access device SAT serving such user equipment UE1, UE2.

At a step 810, the non-terrestrial communication network NW may determine relaying assistance information. Such relaying assistance information may for example correspond to the relaying assistance information as detailed at step 610 of figure 6. Such relaying assistance information may be determined by the core network CN, the base station BS and/or any other network entity of the non-terrestrial communication network NW. Such relaying assistance information may be determined based on the knowledge of the non-terrestrial communication network NW about the coverage of the user equipment UE1, UE2, the associated access devices SAT serving such user equipment UE1, UE2, measurements performed in the non-terrestrial communication network NW.

At a step 810a, the non-terrestrial communication network NW may determine and transmit relaying assistance information to the relaying user equipment UER. The relaying assistance information transmitted to the relaying user equipment UER may correspond to the relaying assistance information as described at step 610 of figure 6. In particular, such relaying assistance information may also include information specific to the cells or the satellite beam footprints associated to the relaying user equipment UER.

At a step 810b, the network entity may determine and transmit user assistance information to eligible user equipment UE1, UE2. Such eligible user equipment UE1, UE2 may for example include at least the first user equipment UE1 and the second user equipment UE2. Such user assistance information may for example be, entirely or partly, diffused, broadcasted or a groupcast to all user equipment UE1, UE2 determined by the network entity as having similar coverage properties. For example, the network entity may diffuse common user assistance information to user equipment belonging to a same cell, being covered by a same satellite beam footprint or being covered by satellite beam footprints projected by inter-connected satellites. The user assistance information may also include both a part of user assistance information common to a plurality of user equipment and a part of user assistance information specific to a particular user equipment. The user assistance information may correspond to the user assistance information as described at step 710 of figure 7.

Once steps 810a and 810b are performed, the non-terrestrial communication network NW encounters a communication switch from the network communication mode to the sidelink communication mode. Once the switch between the sidelink communication mode is performed, the network entity may stop transmitting messages to either the relaying user equipment UER or the user equipment UE1, UE2. For example, the network communication mode may be suspended after steps 810a and 810b. For example, the feeder link FL1 may remain unused after steps 810a and 81 0b, without interrupting signal transmissions between the first user equipment UE1 and the second user equipment UE2 via the relaying user equipment UER in the sidelink communication mode. In another embodiment, both the network communication mode and the sidelink communication mode may be concurrently activated.

At an optional step 820, the network entity may transmit additional assistance information. Such additional assistance information may be transmitted to the relaying user equipment UER. Such additional assistance information may also be transmitted to the user equipment UE1, UE2, for example when the network communication mode and the sidelink communication mode are concurrently used by the user equipment UE1, UE2. Such additional assistance information may for example be network information such as satellite ephemerides, synchronization information and/or system information blocks (SIB). Such additional assistance information may also comprise information for switching back from the sidelink communication mode to the network communication mode. Such additional assistance information may correspond to the additional assistance information of step 750 as received by the user equipment UE1, UE2 or of step 670 as relayed by the relaying user equipment UER. Such additional assistance information may be emitted by the network entity concurrently to the relaying assistance information emitted to the relaying user equipment at step 810a and/or concurrently to the user assistance information emitted to the user equipment UE1, UE2 at step 810b.

At a step 830, the network entity may command a communication back switch to a network communication mode. Such back switch may for example be triggered by the expiration of a timer indicating a service termination of the sidelink communication mode. Such back switch may also occur after a radio link recovery performed by the user equipment UE1, UE2 after a radio link failure (or RLF), thus reestablishing the network communication mode.

It is now referred to figure 9. Figure 9 illustrates steps summarizing the proposed method for relaying a signal between a first user equipment UE1 and a second user equipment UE2 in a non-terrestrial communication network NW. In particular, figure 9 illustrates the signaling performed between the first user equipment UE1, the second user equipment UE2, the relaying user equipment UER and at least one non-terrestrial network entity N of the non-terrestrial communication network NW. Such network entity N may for example be an entity of the core network CN or a base station BS. The signaling is represented by arrows, with dotted arrows representing optional or alternative signaling.

At a step 100, the network entity N transmits at least part of the network assistance information to the relaying user equipment UER. Such part of the network assistance information notably corresponds to the relaying assistance information related to the establishment of a sidelink communication mode between the relaying user equipment UER and at least a user equipment among the first user equipment UE1 and the second user equipment UE2. Such part of the network assistance information may be determined by one or several non-terrestrial network entities N of the network NW and transmitted to the relaying user equipment UER onboard the access device SAT, for instance via the feeder link control channel.

At steps 101 and 102, the network entity N may also transmit another part of the network assistance information to the first user equipment UE1 and/or the second user equipment UE2. Such another part of the network assistance information notably may correspond to at least part of the user assistance information related at least to an establishment of a sidelink communication mode with the relaying user equipment (UER). Such another part of the network assistance information may at least partially coincide with the part of the network assistance information transmitted to the relaying user equipment UER at step 100.

At steps 201 and 202, the relaying user equipment UER may transmit messages to the first user equipment UE1 and to the second user equipment UE2. In an embodiment, such messages may correspond to sidelink communication requests for initiating a sidelink communication interface (or PC5 interface) with the first user equipment UE1 and the second user equipment UE2 respectively.

At steps 301 and 302, in an embodiment, the relaying user equipment UER may also relay part of the relaying assistance information, also referred to as the relayed assistance information, to the first user equipment UE1 and/or the second user equipment UE2. Thus, from the perspective of the first and second user equipment UE1, UE2, the user assistance information received by the first and second user equipment UE1, UE2 may be transmitted by the network entity N and/or the relaying user equipment UER. The relaying user equipment UER may transmit such part of the relaying assistance information to the first and/or second user equipment UE1, UE2 after or while initiating the sidelink communication interface at steps 201 and 202.

At steps 311 and 312, as alternative steps to steps 201 and 202, the first user equipment UE1 and the second user equipment UE2 may transmit messages to the relaying user equipment UER. Such messages may correspond to sidelink communication requests for initiating a sidelink communication interface (or PC5 interface) with the relaying user equipment UER. In particular, such sidelink communication requests initiated on the user equipment UE1, UE2 side may rely on the user assistance information provided to the first and second user equipment UE1, UE2 at steps 101, 102 and/or 301, 302.

At steps 401 and 402, a sidelink communication interface (or PC5 interface) is established between the first user equipment UE1 and the relaying user equipment UER, and between the second user equipment UE2 and the relaying user equipment UER respectively. Thus, the sidelink communication mode is established for the first and second user equipment UE1, UE2, with the relaying user equipment UER acting as a relay. At steps 401 and 402, a signal may be transmitted between the first user equipment UE1 and the second user equipment UE2 via the relaying user equipment UER.

At steps 501 and 502, the relaying user equipment UER may transmit additional assistance information to the first and second user equipment UE1, UE2 respectively. In particular, such additional assistance information may be transmitted to the user equipment UE1, UE2 by the relaying user equipment UER via the sidelink communication interface, in the sidelink communication mode.

Alternatively or in addition to steps 501 and 502, the network entity N (or several network entities of the non-terrestrial communication network NW) may transmit such additional assistance information to the first and second user equipment UE1, UE2 at respective steps 511 and 512. In particular, such additional assistance information may be transmitted to the user equipment UE1, UE2 by the network entity N via the Uu interface, notably in the case of a maintained active feeder link during the sidelink communication mode.

## Claims

1. A method performed by a non-terrestrial communication network (NW) for relaying a signal between at least a first user equipment (UE1) and a second user equipment (UE2), a relaying user equipment (UER) being embarked on a network access device (SAT) of the non-terrestrial communication network (NW), the method comprising:
obtaining at least relaying assistance information related to an establishment of a sidelink communication mode between the relaying user equipment (UER) and at least a user equipment among the first user equipment (UE1) and the second user equipment (UE2),
transmitting at least part of said relaying assistance information to at least the first user equipment (UE1) and the second user equipment (UE2),
based on said relaying assistance information, establishing at least a first sidelink communication link between the relaying user equipment (UER) and the first user equipment (UE1), and a second sidelink communication link between the relaying user equipment (UER) and the second user equipment (UE2),
relaying the signal between the first user equipment (UE1) and the second user equipment (UE2) via the first sidelink communication link and the second sidelink communication link and using the established sidelink communication mode.

2. The method according to any one of the precedent claims further comprising:
based on said relaying assistance information, initiating at last one link among the first sidelink communication link and the second sidelink communication link.

3. The method according to any one of the precedent claims, wherein the relaying assistance information includes control assistance information related to an indication to switch between a network communication mode and the sidelink communication mode.

4. The method according to any one of the precedent claims, wherein the relaying assistance information includes access assistance information related to data identifying user equipment connected to the non-terrestrial communication network (NW) and eligible to communicate with the relaying user equipment (UER) via the sidelink communication mode.

5. The method according to any one of the precedent claims, wherein the relaying assistance information includes at least one element among:
- setup configuration information for establishing a sidelink communication interface (SLi) of the sidelink communication mode,
- data related to a timing advance to be applied by at least the first user equipment (UE1) and the second user equipment (UE2) in the sidelink communication mode, and
- data related to resource allocation for the sidelink communication mode.

6. The method according to any one of the precedent claims further comprising:
transmitting additional assistance information to at least one user equipment among the first user equipment (UE1) and the second user equipment (UE2), said additional assistance information being related to the non-terrestrial communication network (NW).

7. The method according to claim 6, wherein the additional assistance information comprise at least one element among:
- system information blocks, SIB, related to the non-terrestrial communication network (NW),
- data related to satellite ephemerides in the non-terrestrial communication network (NW),
- reference signals related to a network communication interface (Ni) used in a network communication mode,
- data related to the network communication mode,
- data related to a termination of the sidelink communication mode,
- data related to radio link failure, RLF, recovery, and
- data related to at least one cell projected by the network access device (SAT) and covering said at least one user equipment.

8. The method according to any one of the precedent claims, further comprising, before relaying the signal:
receiving a sidelink communication request from at least the first user equipment (UE1),
based on the relaying assistance information and said sidelink communication request, establishing the first sidelink communication link.

9. A communication method performed by a first user equipment (UE1) for transmitting a signal to at least a second user equipment (UE2) in a non-terrestrial communication network (NW), the communication method comprising:
receiving user assistance information related at least to an establishment of a sidelink communication mode with at least a relaying user equipment (UER),
based on at least said user assistance information, establishing a first sidelink communication link with said relaying user equipment (UER),
transmitting the signal to the second user equipment (UE2) via said established first sidelink communication link.

10. The communication method according to claim 9 further comprising:
based on at least said user assistance information, initiating the first sidelink communication link with said relaying user equipment (UER) by emitting a sidelink communication request.

11. The communication method according to any one of claims 9 and 10, wherein the user assistance information includes at least data related to an identification of the relaying user equipment (UER).

12. The communication method according to any one of claims 9 to 11, wherein the user assistance information includes at least one element among:
- setup configuration information for establishing a sidelink communication interface (SLi) of the sidelink communication mode,
- data related to a timing advance to be applied in the sidelink communication mode,
- data related to resource allocation for the sidelink communication mode.

13. A switching method performed by a network entity (N) for establishing a communication switch in a non-terrestrial communication network (NW) for a signal between a first user equipment (UE1) and a second user equipment (UE2), said communication switch being performed between a network communication mode and a sidelink communication mode, said switching method comprising:
determining a relaying user equipment (UER) associated to at least the first user equipment (UE1) and the second user equipment (UE2) for relaying a signal between the first user equipment (UE1) and the second user equipment (UE2),
determining network assistance information related to at least an establishment of the sidelink communication mode,
transmitting, via the network communication mode, at least part of said network assistance information to the relaying user equipment (UER),
establishing a communication switch between the network communication mode and the sidelink communication mode based on at least said network assistance information.

14. The switching method according to claim 13, wherein said relaying user equipment (UER) is embarked on a first network access device (SAT) of the non-terrestrial communication network (NW) and said relaying user equipment (UER) is determined depending on at least:
- a coverage zone of the first user equipment (UE1) and the second user equipment (UE2) by at least said first network access device (SAT1),
- an inter-satellite link, ISL between at least said first network access device (SAT1) and a second network access device (SAT2) of the non-terrestrial communication network (NW) covering at least one of the first user equipment (UE1) and the second user equipment (UE2).

15. A computer-readable non-transient recording medium on which a software is registered to implement one of the following methods, when the software is executed by a processor:
- the method according to any one of claims 1 to 8,
- the communication method according to any one of claims 9 to 12, and
- the switching method according to any one of claims 13 and 14.
